(19) Europäisches Patentamt
European Patent Office
Office européen des brevets

(11) **EP 4 797 818 A1**

(12) **EUROPEAN PATENT APPLICATION**
published in accordance with Art. 153(4) EPC

(43) Date of publication:
**26.08.2026 Bulletin 2026/35**

(21) Application number: **23956139.2**

(22) Date of filing: **20.10.2023**

(51) International Patent Classification (IPC):
***H04W 52/34*** *(2009.01)* ***H04W 16/28*** *(2009.01)*
***H04W 72/21*** *(2023.01)*

(52) Cooperative Patent Classification (CPC):
**H04W 16/28; H04W 52/34; H04W 72/21**

(86) International application number:
**PCT/JP2023/038054**

(87) International publication number:
**WO 2025/083892 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **NAGATA, Satoshi**
  **Tokyo 100-6150 (JP)**
- **SUN, Weiqi**
  **Beijing 100190 (CN)**
- **WANG, Jing**
  **Beijing 100190 (CN)**
- **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

# (54) TERMINAL, WIRELESS COMMUNICATION METHOD, AND BASE STATION

(57) A terminal according to one aspect of the present disclosure includes a receiving section that receives at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell, and a control section that controls transmission of type 1 power headroom (PHR) for uplink shared channel (PUSCH) transmission associated with a certain TCI state. The control section controls transmission of a first or second type 1 PHR for reference PUSCH transmission by using a specific parameter associated with a first or second TCI state.

(TS 38.213) 7.7.1 Type 1 PH report
If a UE is provided, for active UL BWP *b* of carrier *f* of serving cell *c*,
- twoPHRMode,
- two SRS resource sets in srs-ResourceSetToAddModList or srs-ResourceSetToAddModListDCI-0-2 with usage set to 'codebook' or 'nonCodebook',
- dl-OrJointTCI-StateList or TCI-UL-State and is indicated a first TCI-State or TCI-UL-State and a second TCI-State or TCI-UL-State, and
- multipanelScheme

the UE provides
- If the actual PUSCH transmission applies only the first indicated TCI-state or TCI-UL-State, a first Type 1 power headroom report and a first configured maximum output power associated with the first *TCI-State* or *TCI-UL-State* for an actual PUSCH transmission using a spatial domain filter corresponding only to the first *TCI-State* or *TCI-UL-State*, and a second Type 1 power headroom report and a second configured maximum output power associated with the second TCI-state or TCI-UL-State for a reference PUSCH transmission. The UE provides the second Type 1 power headroom report for reference PUSCH transmission using the p0AlphaSetforPUSCH and pathlossReferenceRS-Id-r17 values associated with the second TCI-State or TCI-UL-State.
- If the actual PUSCH transmission applies only the second indicated TCI-state or TCI-UL-State, a first Type 1 power headroom report and a first configured maximum output power associated with the first TCI-state or TCI-UL-State for a reference PUSCH transmission, and a second Type 1 power headroom report and a second configured maximum output power associated with the second *TCI-State* or *TCI-UL-State* for an actual PUSCH transmission using a spatial domain filter corresponding only to the second *TCI-State* or *TCI-UL-State*. The UE provides the first Type 1 power headroom report for reference PUSCH transmission using the p0AlphaSetforPUSCH and pathlossReferenceRS-Id-r17 values associated with the first TCI-State or TCI-UL-State.
- a first Type 1 power headroom report and a first configured maximum output power associated with the first *TCI-State* or *TCI-UL-State*, and a second Type 1 power headroom report and a second configured maximum output power associated with the second *TCI-State* or *TCI-UL-State*, for an actual PUSCH transmission using a spatial domain filter corresponding to the first *TCI-State* or *TCI-UL-State* and using a spatial domain filter corresponding to the second *TCI-State* or *TCI-UL-State*.
- If the UE determines that both Type 1 PHRs are based on reference PUSCH transmissions a first Type 1 power headroom and a first configured max output power associated with the first indicated joint/UL TCI state for a reference PUSCH transmission, and the second Type 1 power headroom and a second configured max output power associated with the second indicated joint/UL TCI state for another reference PUSCH transmission. The UE provides the first Type 1 power headroom report for reference PUSCH transmission using the p0AlphaSetforPUSCH and pathlossReferenceRS-Id-r17 values associated with the first TCI-State or TCI-UL-State. The UE provides the second Type 1 power headroom report for reference PUSCH transmission using the p0AlphaSetforPUSCH and pathlossReferenceRS-Id-r17 values associated with the second TCI-State or TCI-UL-State.

FIG.9

Processed by Luminess, 75001 PARIS (FR)

EP 4 797 818 A1

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE can use one of a multi-panel (or a multi-beam) for uplink (UL) transmission. To improve UL throughput/reliability, it is studied that simultaneous UL transmission (for example, simultaneous multi-panel UL transmission (SiMPUL/sTxMP)) using a plurality of panels is supported for one or more transmission/reception points (TRPs).

When multi-panel simultaneous UL transmission is supported, the UE simultaneously transmits a UL from two panels; however, reporting/calculation of a PHR in this case has not been clarified. For example, events/conditions by which the PHR is triggered have not been clarified. Accordingly, transmission control may not be appropriately performed, and communication throughput may decrease.

In view of this, the present disclosure has one object to provide a terminal, a radio communication method, and a base station that can appropriately perform transmission power control.

### Solution to Problem

A terminal according to one aspect of the present disclosure includes a receiving section that receives at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell, and a control section that controls transmission of type 1 power headroom (PHR) for uplink shared channel (PUSCH) transmission associated with a certain TCI state. The control section controls transmission of a first or second type 1 PHR for reference PUSCH transmission by using a specific parameter associated with a first or second TCI state.

### Advantageous Effects of Invention

According to one aspect of the present disclosure, transmission power control can be appropriately performed.

### Brief Description of Drawings

[FIG. 1] FIG. 1A and FIG. 1B are diagrams to show examples of a unified/common TCI framework.
[FIG. 2] FIG. 2A and FIG. 2B are diagrams to show examples of DCI-based TCI state indications.
[FIG. 3] FIG. 3A and FIG. 3B are diagrams to show examples of RRC fields and DCI fields in Rel. 17.
[FIG. 4] FIG. 4A and FIG. 4B are diagrams to show examples of single-panel transmission.
[FIG. 5] FIG. 5A to FIG. 5C are diagrams to show examples of multi-panel transmission.
[FIG. 6] FIG. 6A to FIG. 6D are diagrams to show examples of single-DCI-based STxMP.
[FIG. 7] FIG. 7A and FIG. 7B are diagrams to show examples of multi-DCI-based STxMP.
[FIG. 8] FIG. 8A to FIG. 8C are diagrams to show examples of multi-DCI-based STxMP.
[FIG. 9] FIG. 9 is a diagram to show a description example of a specification related to a type 1 power headroom report according to a first embodiment.
[FIG. 10] FIG. 10 is a diagram to show a description example of a specification related to the type 1 power headroom report according to a second embodiment.
[FIG. 11] FIG. 11A and FIG. 11B are diagrams to show description examples of a specification related to the type 1 power headroom report according to a third embodiment.
[FIG. 12] FIG. 12A and FIG. 12B are diagrams to show description examples of a specification related to the type 1 power headroom report according to a fourth embodiment.
[FIG. 13] FIG. 13A to FIG. 13D are diagrams to show description examples of a specification related to the type 1 power headroom report according to a fifth embodiment.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

Description of Embodiments

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

{Physical Layer Procedure/Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

{RRC Protocol Specification/RRC IE/TCI State}

A TCI-State (TCI state) associates one or two DL reference signals (RSs) with a corresponding QCL type. If an additional physical cell identifier (PCI) is configured for the RS, the same value is configured for both of the DL RSs.

(Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be

configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

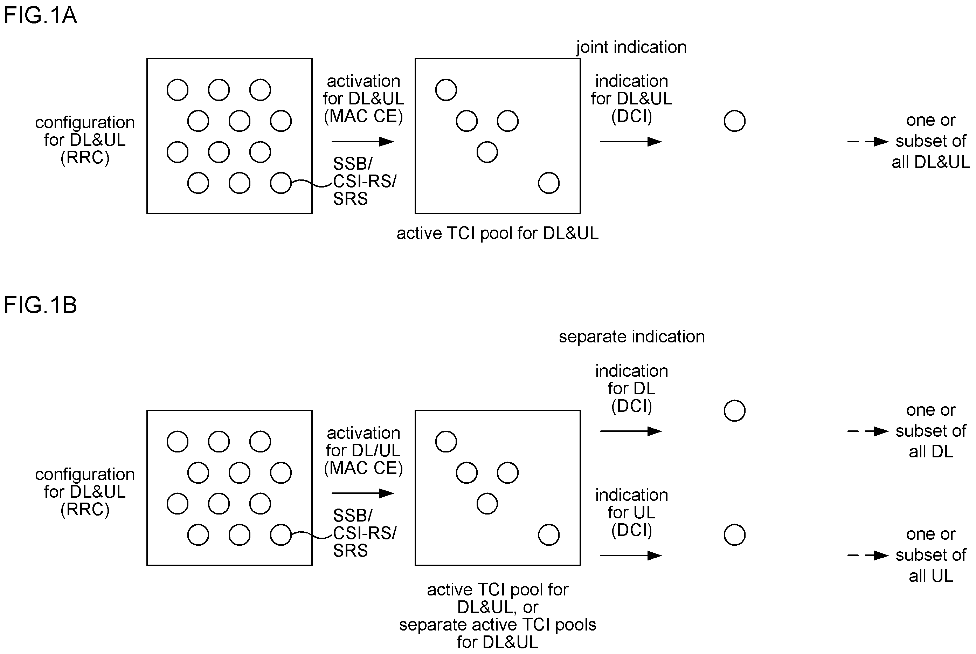

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

{Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured

with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-Updated-List1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies this indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

(TCI State Indication)

A Rel-17 unified TCI framework supports Modes 1 to 3 below.

{Mode 1} MAC CE based TCI state indication
{Mode 2} DCI-based TCI state indication with DL assignment (DCI based TCI state indication by DCI format 1_1/1_2 with DL assignment)
{Mode 3} DCI-based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.

- A CS-RNTI is used to scramble a CRC for the DCI.
- Values of the following DCI fields (special fields) are set as follows:
  - redundancy version (RV) fields are all '1's
  - modulation and coding scheme (MCS) fields are all '1's
  - a new data indicator (NDI) field is 0
  - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each

CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.
The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

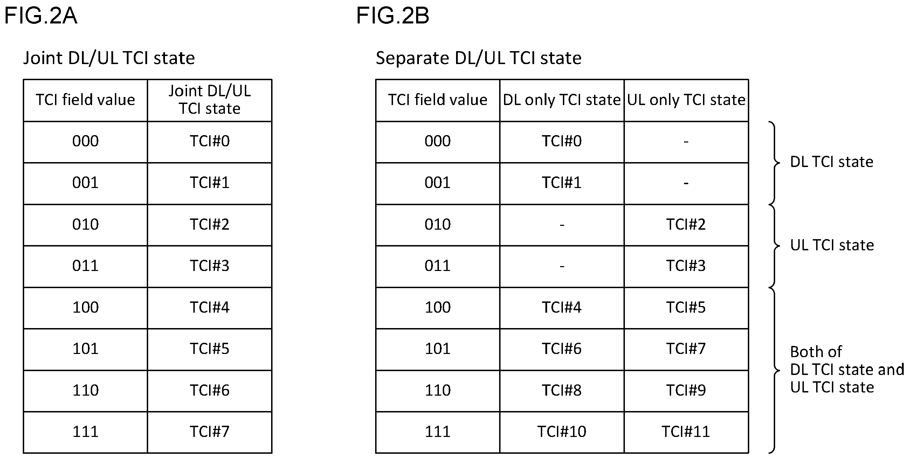

FIG. 2A shows an example of a DCI-based joint DL/UL TCI state indication. A TCI state ID indicating a joint DL/UL TCI state is associated with a TCI field value for the joint DL/UL TCI state indication.
FIG. 2B shows an example of a DCI-based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

(Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).
In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.
The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.
For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.
The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.
It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).
It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.
It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.
It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, a legacy MAC CE/RACH signalling mechanism may be used.

Note that a CSI-RS associated with a Rel-17 TCI state applied to CORESET #0 may be QCLed with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

(PUSCH Repetition)

In Rel. 17, it is studied that PUSCH repetition is introduced.

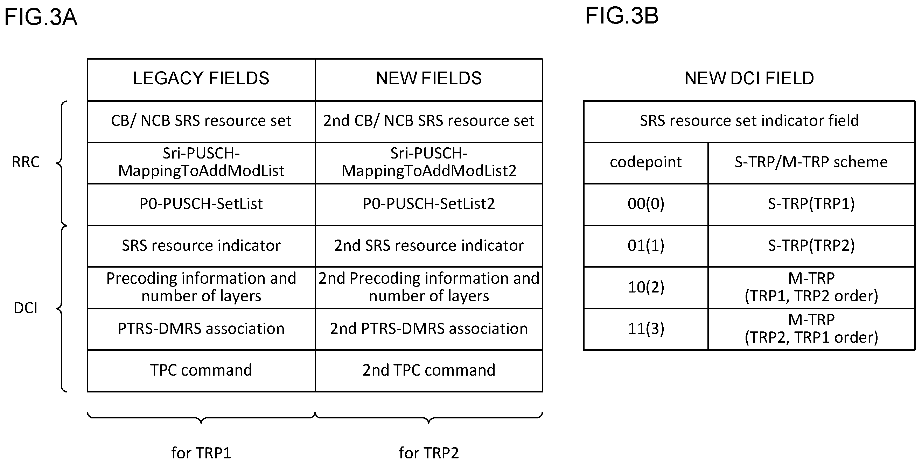

With reference to FIG. 3A and FIG. 3B, RRC fields and DCI fields related to PUSCH repetition will be described below.

The RRC fields related to PUSCH transmission defined in up to Rel. 16 include a field related to a codebook (CB)/non-codebook (NCB) SRS resource set, a field (sri-PUSCH-MappingToAddModList) related to mapping (power control) between an SRI and a PUSCH, and a field (p0-PUSCH-SetList) related to P0 of a PUSCH for each SRI.

The DCI fields related to PUSCH transmission defined in up to Rel. 16 include an SRS resource indicator field, a precoding information and number of layers field, a PTRS-DMRS association field, and a TPC command field.

In Rel. 17, if two CB/NCB SRS resource sets are configured, an SRS resource set indicator field is added in DCI format 0_1/0_2.

The SRS resource set indicator field includes 2 bits. When the SRS resource set indicator field indicates a codepoint "00 (0)", it indicates single-TRP operation using a first TRP (TRP1). When the SRS resource set indicator field indicates a codepoint "01 (1)", it indicates single-TRP operation using a second TRP (TRP2). When the SRS resource set indicator field indicates a codepoint "10 (2)", it indicates multi-TRP operation in order of the first TRP (TRP1) and the second TRP (TRP2) in PUSCH repetition. When the SRS resource set indicator field indicates a codepoint "11 (3)", it indicates multi-TRP operation in order of the second TRP (TRP2) and the first TRP (TRP1) in PUSCH repetition (see FIG. 3B).

When the SRS resource set indicator field is added in DCI format 0_1/0_2, a second field (sri-PUSCH-MappingToAddModList2) related to mapping (power control) between an SRI and a PUSCH and a second field (p0-PUSCH-SetList2) related to P0 of a PUSCH for each SRI are added as new RRC fields (see FIG. 3A). These fields are used as fields for the second TRP (TRP2), and the legacy fields are used as fields for the first TRP (TRP1).

When the SRS resource set indicator field is added in DCI format 0_1/0_2, a second SRS resource indicator field, a second precoding information and number of layers field, a second PTRS-DMRS association field, and a second TPC command field are added in the DCI format (see FIG. 3A). These fields are used as fields for the second TRP (TRP2), and the legacy fields are used as fields for the first TRP (TRP1).

(UL TCI State)

In NR of Rel. 16 or later versions, it is studied that the UL TCI state is used as a UL beam indication method. Notification of the UL TCI state is similar to notification of a DL beam (DL TCI state) of the UE. Note that the DL TCI state may be interchangeably interpreted as a TCI state for a PDCCH/PDSCH.

A channel/signal (which may be referred to as a target channel/RS) for which the UL TCI state is configured

(indicated) may be at least one of a PUSCH (a PUSCH DMRS), a PUCCH (a PUCCH DMRS), a random access channel (Physical Random Access Channel (PRACH)), an SRS, and the like, for example.

For example, the RS (source RS) to have a QCL relationship with the channel/signal may be a DL RS (for example, an SSB, a CSI-RS, a TRS, or the like), or may be a UL RS (for example, an SRS, an SRS for beam management, or the like).

In the UL TCI state, the RS to have a QCL relationship with the channel/signal may be associated with the panel ID for receiving or transmitting the RS. The association may be explicitly configured (or indicated) by higher layer signaling (for example, RRC signaling, a MAC CE, or the like), or may be implicitly determined.

A correspondence relationship between the RS and the panel ID may be configured by being included in UL TCI state information, or may be configured by being included in at least one of resource configuration information, spatial relation information, and the like of the RS.

QCL types indicated by the UL TCI state may be legacy QCL types A to D, may be other QCL types, or may include certain spatial relation, a related antenna port (port index), or the like.

When the UE is indicated with a related panel ID (for example, indicated by DCI) for UL transmission, the UE may perform the UL transmission by using a panel corresponding to the panel ID. The panel ID may be associated with the UL TCI state, and when the UE is indicated (or activated) with the UL TCI state for a certain UL channel/signal, the UE may identify a panel to be used for transmission of the UL channel/signal in accordance with the panel ID related to the UL TCI state.

(Channel/RS to Which Indicated TCI State Is Applied)

An indicated TCI state with a MAC CE/DCI may be applied to the following channels/RSs.

{PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

{PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

{CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

{PUCCH}

- The indicated TCI state is always applied to all the dedicated PUCCH resources.

{PUSCH}

The indicated TCI state is always applied to a dynamic/configured grant PUSCH.

{SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

(Single-Panel Transmission)

At least one of transmission schemes A and B below (single-panel UL transmission schemes A and B) may be applied to single-panel UL transmission or candidates for a single-panel UL transmission scheme. Note that, in the present disclosure, a panel/UE panel may be interpreted as a UE capability value set reported for each UE capability. In the present disclosure, different panels, different spatial relations, different joint TCI states, different TPC parameters, different antenna ports, and the like may be interchangeably interpreted.

<Transmission Scheme A: Single-Panel Single-TRP UL Transmission>

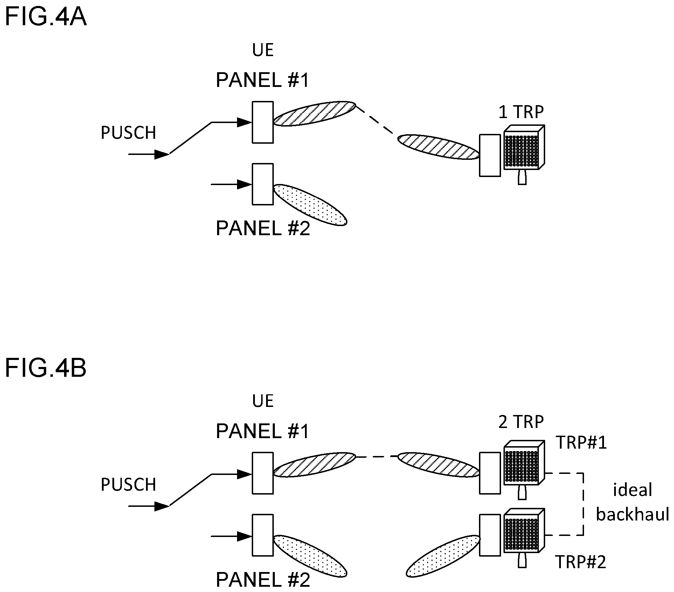

In Rel. 15 and Rel. 16, the UE uses a transmission scheme in which UL is transmitted to one TRP from only one beam and panel at one timing (FIG. 4A).

<Transmission Scheme B: Single-Panel Multi-TRP UL Transmission>

In Rel. 17, it is studied that UL transmission from only one beam and panel is performed at one timing and repetition transmission to a plurality of TRPs is performed (FIG. 4B). In the example of FIG. 4B, the UE transmits a PUSCH to TRP #2 from panel #2 after transmitting a PUSCH to TRP #1 from panel #1 (switching the beam and panel). The two TRPs are connected to each other via an ideal backhaul.

(Multi-Panel Transmission)

For Rel. 18 (or later versions), it is studied that for improvement of UL throughput/reliability, simultaneous UL transmission (for example, simultaneous multi-panel UL transmission (or STxMP)) using a plurality of panels is supported for one or more TRPs. A multi-panel UL transmission scheme for a certain UL channel (for example, PUSCH/PUCCH) and the like is also under study.

As multi-panel UL transmission, up to X panels (for example, X = 2) and up to Y panels (for example, Y = 2) may be supported, for example. Note that the values of X and Y are not limited to these. When UL precoding indication for a PUSCH is supported in the multi-panel UL transmission, a codebook for legacy systems (for example, Rel. 16 (or earlier versions)) may be supported for multi-panel simultaneous transmission. When single-DCI and multi-DCI-based multi-TRP operations are considered, the number of layers and the number of codewords (CWs) may be up to x (for example, x = 4) and up to y (for example, y = 2) in all the panels, respectively. Note that the values of x and y are not limited to these.

For a multi-panel UL transmission scheme or candidates for the multi-panel UL transmission scheme, at least one of schemes 1 to 3 below (multi-panel UL transmission schemes 1 to 3) is under study. Only one of transmission schemes 1 to 3 may be supported. A plurality of schemes including at least one of transmission schemes 1 to 3 may be supported, and one of the plurality of transmission schemes may be configured for the UE.

<Transmission Scheme 1: Coherent Multi-Panel UL Transmission>

A plurality of panels may be synchronized with each other. All the layers are mapped to all the panels. A plurality of analog beams are indicated. An SRS resource indicator (SRI) field may be enhanced. This scheme may use up to four layers for UL.

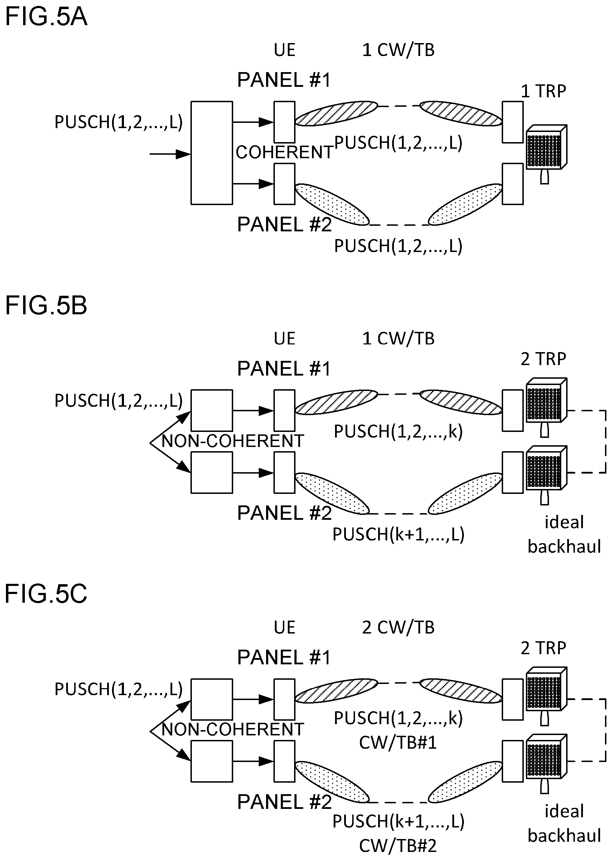

In the example of FIG. 5A, the UE maps one codeword (CW) or one transport block (TB) to L layers (PUSCH (1, 2, ..., L)) to transmit L layers from each of the two panels. Panel #1 and panel #2 are coherent with each other. Transmission

scheme 1 can obtain a gain by diversity. A total number of layers in the two panels is 2L. When a maximum value of the total number of layers is 4, a maximum value of the number of layers in one panel is 2.

<Transmission Scheme 2: Non-Coherent Multi-Panel UL Transmission with One Codeword (CW) or Transport Block (TB)>

A plurality of panels may not be synchronized with each other. Different layers are mapped to different panels and one CW or TB for PUSCHs from the plurality of panels. Layers corresponding to one CW or TB may be mapped to the plurality of panels. This transmission scheme may use up to four layers or up to eight layers for UL. When up to eight layers are supported, this transmission scheme may support one CW or TB using up to eight layers.

In the example of FIG. 5B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Transmission scheme 2 can obtain a gain by multiplexing and diversity. A total number of layers in the two panels is L.

<Transmission Scheme 3: Non-Coherent Multi-Panel UL Transmission with Two CWs or TBs>

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In the example of FIG. 5C, the UE maps CW #1 or TB #1 and CW #2 or TB #2 of the 2 CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Transmission scheme 3 can obtain a gain by multiplexing and diversity. A total number of layers in the two panels is L.

In each of the above-described transmission schemes, the base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

(Simultaneous Multi-Panel Transmission)

In Rel. 18 or later versions, for the above-described one or more transmission schemes/modes, multi-panel UL transmission (for example, simultaneous multi-panel transmission (Simultaneous Transmission across Multiple Panels (STxMP))) for scheduling of a PUSCH based on one DCI (single DCI)/scheduling of a PUSCH based on a plurality of DCIs (multi-DCI) is under study.

For example, in Rel. 18, it is assumed that the following STxMP is supported:

- Single-DCI PUSCH SDM scheme.
- Single-DCI PUSCH SFN scheme.
- Single-DCI PUCCH SFN scheme.
- Multi-DCI overlapping PUSCH+PUSCH scheme.

<Single DCI-Based STxMP>

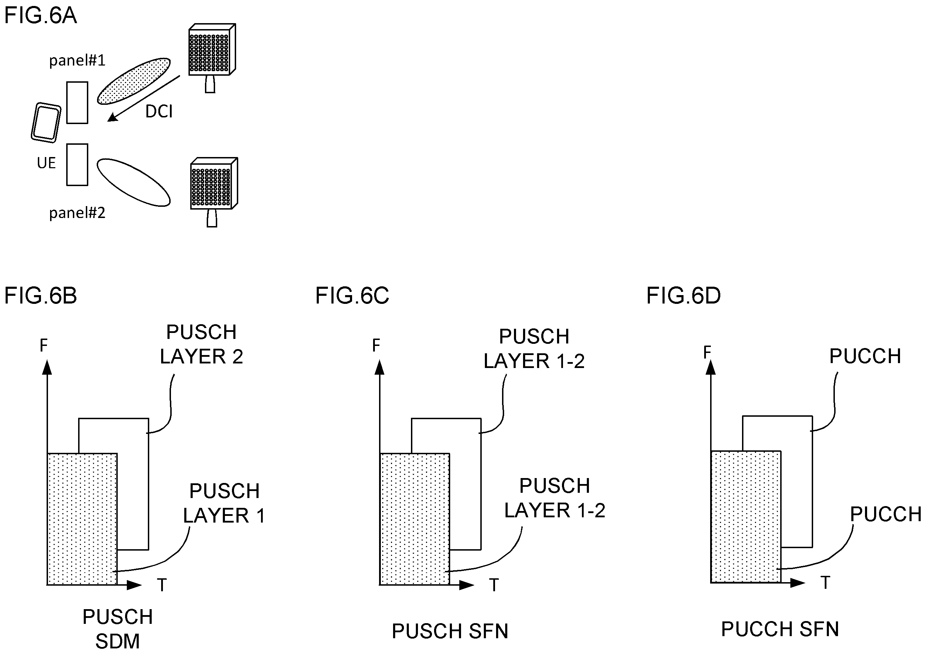

In Rel. 18 or later versions, the UE including a plurality of panels (for example, panel #1 and panel #2) may support simultaneous multi-panel transmission (STxMP) in a single DCI-based multi-TRP system (see FIG. 6A). In single DCI-based STxMP, the following schemes may be applied to UL transmission (for example, PUSCH, PUCCH, or PUSCH+PUCCH).

- Space division multiplexing (SDM) scheme (PUSCH): Different layers/DMRS ports of one PUSCH are separately precoded, and are simultaneously transmitted from different UE panels/beams (see FIG. 6B).
- Single frequency network (SFN)-based transmission scheme (PUSCH): All layers/DMRS ports of one PUSCH are simultaneously transmitted from two different UE panels/beams (see FIG. 6C).
- Single frequency network (SFN)-based transmission scheme (PUCCH): One PUCCH is simultaneously transmitted

from a different panel (see FIG. 6D).

FIG. 6B shows an example of a case in which the single DCI-based PUSCH SDM scheme is applied. The UE may assume that PUSCH repetition transmissions to which SDM is applied are scheduled in the same time resource and the same frequency resource. In other words, when a plurality of coherent panels are used, the UE may transmit PUSCH repetition transmissions to which SDM is applied in the same time resource and the same frequency resource. FIG. 6B shows a case in which the time and frequency resources of layer #1 and layer #2 corresponding to the PUSCH are the same.

FIG. 6B may be applied to a case in which SDM is applied to one CW (or TB), or may be applied to a case in which SDM is applied to two CWs (or TBs). When SDM is applied to two CWs, two CWs simultaneously transmitted from two different panels are spatially multiplexed.

FIG. 6C shows an example of a case in which the single DCI-based PUSCH SFN-based transmission scheme (for example, the SFN-based transmission scheme) is applied. In the SFN, the UE transmits the same signal from respective panels corresponding to different TCI states (for example, joint/UL TCI states) to the same RE. Here, all layers (for example, layers #1 to #2)/DMRS ports of one PUSCH are simultaneously transmitted from two different UE panels (for example, panel #1 and panel #2).

FIG. 6D shows an example of a case in which the single DCI-based PUCCH SFN-based transmission scheme (for example, the SFN-based transmission scheme) is applied. Here, one PUCCH is simultaneously transmitted from different panels (for example, panel #1 and panel #2).

In the single DCI-based PUSCH SDM scheme/SFN scheme, a plurality of (for example, two) SRS resource sets may be configured, and a plurality of (for example, two) SRI fields/TPMI fields may be indicated.

In the single DCI-based PUCCH SFN scheme, a plurality of (for example, two) TCI states may be applied to one PUCCH resource.

<Multi-DCI-Based STxMP>

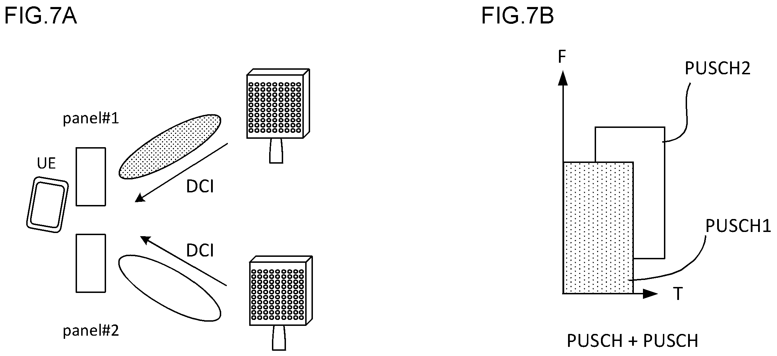

In Rel. 18 or later versions, the UE including a plurality of panels (for example, panel #1 and panel #2) may support simultaneous multi-panel transmission (STxMP) in a multi-DCI-based multi-TRP system (see FIG. 7A). In multi-DCI-based STxMP, UL channel/UL signal simultaneous transmission (for example, PUSCH+PUSCH) may be supported (see FIG. 7B). For example, two PUSCHs overlapping in the time domain are associated with different TRPs, and are simultaneously transmitted from different UE panels/beams.

The UE may simultaneously transmit two independent PUSCHs associated with different TRPs in the same active BWP. The total number of layers corresponding to the two independent PUSCHs may be defined as up to X (or X or less). X may be 4, for example, or may be another value. The maximum number of layers of each of the two PUSCHs may be X/2 (for example, 2), or may be another value. The two independent PUSCHs may be associated with different CORESET pool indices.

In the multi-DCI-based PUSCH+PUSCH, a plurality of (for example, two) SRS resource sets may be configured, and the two SRS resource sets may be respectively associated with (for example, two) different CORESET pool indices.

In Rel. 18, as multi-DCI-based STxMP, simultaneous transmission of PUSCHs (for example, the PUSCH+PUSCH scheme) is supported. Further, in Rel. 19 or later versions, as multi-DCI-based STxMP, it is also assumed that simultaneous transmission of simultaneous transmission (for example, STxMP PUCCH+PUCCH, STxMP PUCCH+PUSCH) including an uplink control channel (for example, a PUCCH) is supported.

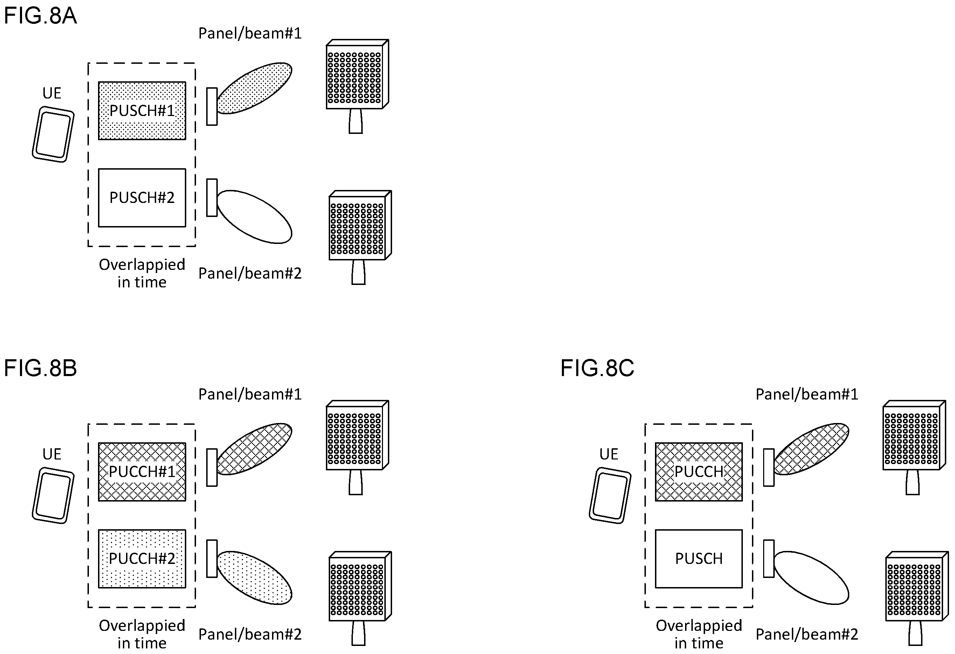

FIG. 8A shows an example of multi-DCI-based STxMP PUSCH+PUSCH, FIG. 8B shows an example of multi-DCI-based STxMP PUCCH+PUCCH, and FIG. 8C shows an example of multi-DCI-based STxMP PUCCH+PUSCH.

In the STxMP PUSCH+PUSCH (see FIG. 8A), two PUSCHs are associated with different TRPs, and are simultaneously transmitted from the UE panels. The two PUSCHs may be partially/fully overlapping in the time domain (partially/fully overlapping in time domain), or may be partially/fully/non overlapping in the frequency domain (partially/-fully/non overlapping in frequency domain). The TRP may be interpreted as a panel, a CORESET pool index, an SRS resource set, an SSB group, a CSI-RS group, a TCI state, or a group of TCI states.

In the STxMP PUCCH+PUCCH (see FIG. 8B), two PUCCHs are associated with different TRPs, and are simultaneously transmitted from the UE panels. The two PUCCHs may be partially/fully overlapping in the time domain (partially/fully overlapping in time domain), or may be partially/fully/non overlapping in the frequency domain (partially/-fully/non overlapping in frequency domain).

In the STxMP PUCCH+PUSCH (see FIG. 8C), one PUCCH and one PUSCH are associated with different TRPs, and are simultaneously transmitted from the UE panels. The one PUCCH and the one PUSCH may be partially/fully overlapping in the time domain (partially/fully overlapping in time domain), or may be partially/fully/non overlapping in the frequency domain (partially/fully/non overlapping in frequency domain).

In Rel. 17 or earlier versions (for example, the STxMP PUCCH+PUCCH of FIG. 8B and the STxMP

PUCCH+PUSCH of FIG. 8C are not supported), UE operation for solving an overlap between a PUCCH and another UL channel/UL signal (for example, PUCCHs, a PUCCH and a PUSCH) is supported.

For example, when a PUCCH and another UL channel/signal overlap, the UE multiplexes UCI of a plurality of PUCCH transmissions to one PUCCH resource, multiplexes UCI of PUCCH transmission to PUSCH transmission, or drops PUCCH/PUSCH transmission. The UL channel to which the UCI is multiplexed/UL channel to be dropped may be determined based on a certain criterion (for example, a UCI type, a priority index of the PUCCH/PUSCH, or the like).

(Transmission Power Control)

<Transmission Power Control for PUSCH>

In NR (for example, Rel. 16), transmission power for the PUSCH is controlled based on a TPC command (also referred to as a value, an increased/decreased value, a correction value, or the like) that is indicated by a value of a certain field (also referred to as a TPC command field or the like) in DCI.

For example, when the UE transmits the PUSCH on an active UL BWP b of a carrier f of a serving cell c by using a parameter set (open loop parameter set) having an index j and an index l of a power control adjustment state, transmission power ($P_{PUSCH,b,f,c}(i, j, q_d, l)$) for the PUSCH in a PUSCH transmission occasion (also referred to as a transmission period or the like) i may be expressed as in the following expression (1).

$$P_{\mathrm{PUSCH}b,f,c}(i,j,q_d,l) = \min\begin{cases} P_{\mathrm{CMAX},f,c}(i), \\ P_{\mathrm{O_PUSCH}b,f,c}(j) + 10\log_{10}(2^{\mu}\cdot M^{\mathrm{PUSCH}}_{\mathrm{RB},b,f,c}(i)) + \alpha_{b,f,c}(j)\cdot PL_{b,f,c}(q_d) + \Delta_{\mathrm{TF},b,f,c}(i) + f_{b,f,c}(i,l) \end{cases} [\mathrm{dBm}] \quad (1)$$

Here, whether the power control adjustment state has a plurality of states (for example, two states) or a single state may be configured by using a higher layer parameter. When a plurality of power control adjustment states are configured, one of the plurality of power control adjustment states may be identified with the index l (for example, $l \in \{0, 1\}$). The power control adjustment state may be referred to as a PUSCH power control adjustment state, a first or second state, or the like.

The PUSCH transmission occasion i is a certain period in which the PUSCH is transmitted, and may include one or more symbols, one or more slots, or the like, for example.

In expression (1), $P_{CMAX,f,c}(i)$ is, for example, transmission power (also referred to as maximum transmission power, UE maximum output power, or the like) for the user terminal configured for the carrier f of the serving cell c in the transmission occasion i. $PO_{_PUSCH,b,f,c}(j)$ is, for example, a parameter (for example, also referred to as a parameter related to a transmission power offset, a transmission power offset P0, a target received power parameter, or the like) related to target received power that is configured for the active UL BWP b of the carrier f of the serving cell c in a parameter set configuration j.

$M^{PUSCH}_{RB,b,f,c}(i)$ is, for example, the number of resource blocks (bandwidth) allocated for the PUSCH for the transmission occasion i in the active UL BWP b of the carrier f of the serving cell c and a subcarrier spacing $\mu$. $\alpha b_{,f,c}(j)$ is a value provided by a higher layer parameter (for example, also referred to as msg3-Alpha, p0-PUSCH-Alpha, a fractional factor, or the like).

$PL_{b,f,c}(q_d)$ is, for example, path loss (path loss compensation) that is calculated in the user terminal by using an index $q_d$ of a reference signal (a path loss reference RS, a DL RS for path loss measurement, PUSCH-PathlossReferenceRS) for the downlink BWP associated with the active UL BWP b of the carrier f of the serving cell c.

$\Delta_{TF,b,f,c}(i)$ is a transmission power adjustment component (offset, transmission format compensation) for the UL BWP b of the carrier f of the serving cell c.

$f_{b,f,c}(i, l)$ is a value (for example, a power control adjustment state, an accumulated value of the TPC commands, or a value by a closed loop) based on a TPC command of the power control adjustment state index l of the active UL BWP of the carrier f of the serving cell c and the transmission occasion i. l may be referred to as a closed loop index.

When the UE is not provided with the path loss reference RS (for example, PUSCH-PathlossReferenceRS) or the UE is not provided with a dedicated higher layer parameter, the UE may calculate $PL_{b,f,c}(q_d)$ by using RS resources from the SSB used to obtain a Master Information Block (MIB).

When the UE is configured with RS resource indices of which number is up to the value of the maximum number (for example, maxNrofPUSCH-PathlossReferenceRS) of path loss reference RSs and a set of RS configurations for each of the RS resource indices by the path loss reference RSs, the set of RS resource indices may include one or both of a set of SS/PBCH block indices and a set of CSI-RS resource indices. The UE may identify the RS resource index $q_d$ in the set of RS resource indices.

When PUSCH transmission is scheduled by a Random Access Response (RAR) UL grant, the UE may use the same RS resource index $q_d$ as that for corresponding PRACH transmission.

When the UE is provided with a configuration (for example, SRI-PUSCH-PowerControl) of power control of the PUSCH by a sounding reference signal (SRS) resource indicator (SRI) and the UE is provided with one or more values of IDs of the path loss reference RSs, the UE may obtain mapping between a set of values for an SRI field in DCI format 0_1 and a set of ID values of the path loss reference RSs from higher layer signaling (for example, sri-PUSCH-PowerControl-Id in SRI-PUSCH-PowerControl). The UE may determine the RS resource index $q_d$ from the IDs of the path loss reference RSs mapped to the SRI field values in DCI format 0_1 for scheduling the PUSCH.

When PUSCH transmission is scheduled by DCI format 0_0 and the UE is not provided with PUCCH spatial relation information for PUCCH resources having the lowest index for the active UL BWP b of each carrier f and the serving cell c, the UE may use the same RS resource index $q_d$ as that for PUCCH transmission in the PUCCH resources.

When PUSCH transmission is scheduled by DCI format 0_0, and the UE is not provided with space setting of PUCCH transmission, or PUSCH transmission is scheduled by DCI format 0_1 not including the SRI field, or the UE is not provided with a configuration of power control of the PUSCH by the SRI, the UE may use the RS resource index $q_d$ including the ID of the path loss reference RS of "0".

When a configured grant configuration (for example, ConfiguredGrantConfig) includes a certain parameter (for example, rrc-CofiguredUplinkGrant) for PUSCH transmission configured by the configured grant configuration, the UE may be provided with the RS resource index $q_d$ by a path loss reference index (for example, pathlossReferenceIndex) in the certain parameter.

When the configured grant configuration does not include the certain parameter for PUSCH transmission configured by the configured grant configuration, the UE may determine the RS resource index $q_d$ from the value of the ID of the path loss reference RS mapped to the SRI field in a DCI format for activating the PUSCH transmission. When the DCI format does not include the SRI field, the UE may determine the RS resource index $q_d$ including the ID of the path loss reference RS of "0".

<Transmission Power Control for PUCCH>

In NR, transmission power for the PUCCH is controlled based on a TPC command (also referred to as a value, an increased/decreased value, a correction value, an indication value, or the like) indicated by a value of a certain field (also referred to as a TPC command field, a first field, or the like) in DCI.

For example, by using the index l of the power control adjustment state, transmission power ($P_{PUCCH,b,f,c}(i, q_u, q_d, l)$) for the PUCCH in a PUCCH transmission occasion (also referred to as a transmission period or the like) i for the active UL BWP b of the carrier f of the serving cell c may be expressed as in the following expression (2).

$$P_{\mathrm{PUCCH}b,f,c}(i,q_u,q_d,l):$$

$$=\min\begin{Bmatrix} P_{\mathrm{CMAX},f,c}(i), \\ P_{\mathrm{O_PUCCH}b,f,c}(q_u)+10\log_{10}(2^{\mu}\cdot M^{\mathrm{PUCCH}}_{\mathrm{RB},b,f,c}(i))+PL_{b,f,c}(q_d)+\Delta_{\mathrm{F_PUCCH}}(F)+\Delta_{\mathrm{TF},b,f,c}(i)+g_{b,f,c}(i,l)\end{Bmatrix}\ [\mathrm{dBm}] \quad (2)$$

The power control adjustment state may be referred to as a PUCCH power control adjustment state, a first or second state, or the like.

The PUCCH transmission occasion i is a certain period in which the PUCCH is transmitted, and may include one or more symbols, one or more slots, or the like, for example.

In expression (2), $P_{CMAX,f,c}(i)$ is, for example, transmission power (also referred to as maximum transmission power, UE maximum output power, or the like) for the user terminal configured for the carrier f of the serving cell c in the transmission occasion i. $PO_{_PUCCH,b,f,c}(qu)$ is, for example, a parameter (for example, also referred to as a parameter related to a transmission power offset, a transmission power offset P0, a target received power parameter, or the like)

related to target received power that is configured for the active UL BWP b of the carrier f of the serving cell c in the transmission occasion i.

$M^{PUCCH}_{RB,b,f,c}(i)$ is, for example, the number of resource blocks (bandwidth) allocated for the PUCCH for the transmission occasion i in the active UL BWP b of the carrier f of the serving cell c and the subcarrier spacing $\mu$. $PL_{b,f,c}(q_d)$ is, for example, path loss that is calculated in the user terminal by using the index $q_d$ of a reference signal (a path loss reference RS, a DL RS for path loss measurement, PUCCH-PathlossReferenceRS) for the downlink BWP associated with the active UL BWP b of the carrier f of the serving cell c.

$\Delta_{F_PUCCH}(F)$ is a higher layer parameter given for each PUCCH format. $\Delta T_{F,b,f,c}(i)$ is a transmission power adjustment component (offset) for the UL BWP b of the carrier f of the serving cell c.

$g_{b,f,c}(i, l)$ is a value (for example, a power control adjustment state, an accumulated value of the TPC commands, a value by a closed loop, or a PUCCH power adjustment state) based on a TPC command of the power control adjustment state index l of the active UL BWP of the carrier f of the serving cell c and the transmission occasion i.

If the UE is provided with information (twoPUCCH-PC-AdjustmentStates) indicating use of two PUCCH power control adjustment states and the PUCCH spatial relation information (PUCCH-SpatialRelationInfo), l = {0, 1} may hold, whereas if the UE is not provided with the information indicating use of two PUCCH power control adjustment states or the PUCCH spatial relation information, l = 0 may hold.

If the UE obtains the TPC command value from DCI format 1_0 or 1_1 and the UE is provided with the PUCCH spatial relation information, the UE may obtain mapping between a PUCCH spatial relation information ID (pucch-SpatialRelationInfoId) value and the closed loop index (closedLoopIndex, power adjustment state index l) by using an index provided by a P0 ID for the PUCCH (p0-PUCCH-Id in p0-Set in PUCCH-PowerControl in PUCCH-Config). When the UE receives an activation command including the value of the PUCCH spatial relation information ID, the UE may determine the value of the closed loop index providing the value of l via a link to a corresponding P0 ID for the PUCCH.

If the UE is provided with a configuration of a $P_{O_PUCCH,b,f,c}(q_u)$ value for a corresponding PUCCH power adjustment state l for the active UL BWP b of the carrier f of the serving cell c by a higher layer, $g_{b,f,c}(i, l) = 0$ and k = 0, 1,..., i. If the UE is provided with the PUCCH spatial relation information, the UE may determine the value of l from the value of $q_u$, based on the PUCCH spatial relation information associated with the P0 ID for the PUCCH corresponding to $q_u$ and the closed loop index value corresponding to l.

$q_u$ may be the P0 ID for PUCCH (p0-PUCCH-Id) indicating P0 for the PUCCH (P0-PUCCH) in a P0 set (p0-Set) for the PUCCH.

<Transmission Power Control for SRS>

For example, by using the index l of the power control adjustment state, transmission power ($P_{SRS,b,f,c}(i, q_s, l)$) for a Sounding Reference Signal (SRS) in an SRS transmission occasion (also referred to as a transmission period or the like) i for the active UL BWP b of the carrier f of the serving cell c may be expressed as in the following expression (3).

The power control adjustment state may be referred to as an SRS power control adjustment state, a value based on a TPC command, an accumulated value of the TPC commands, a value by a closed loop, a first or second state, or the like. l may be referred to as a closed loop index.

The SRS transmission occasion i is a certain period in which the SRS is transmitted, and may include one or more symbols, one or more slots, or the like, for example.

$$P_{\mathrm{SRS},b,f,c}(i,q_s,l) = \min\begin{Bmatrix} P_{\mathrm{CMAX},f,c}(i), \\ P_{\mathrm{O_SRS},b,f,c}(q_s) + 10\log_{10}(2^{\mu}\cdot M_{\mathrm{SRS},b,f,c}(i)) + \alpha_{\mathrm{SRS},b,f,c}(q_s)\cdot PL_{b,f,c}(q_d) + h_{b,f,c}(i,l) \end{Bmatrix} [\mathrm{dBm}] \quad (3)$$

In expression (3), $P_{CMAX,f,c}(i)$ is, for example, UE maximum output power for the carrier f of the serving cell c in the SRS transmission occasion i. $P_{O_SRS,b,f,c}(q_s)$ is, for example, a parameter (for example, also referred to as a parameter related to a transmission power offset, a transmission power offset P0, a target received power parameter, or the like) related to target received power that is provided by p0 for the active UL BWP b of the carrier f of the serving cell c and an SRS resource set $q_s$ (provided by SRS-ResourceSet and SRS-ResourceSetId).

$M_{SRS,b,f,c}(i)$ is an SRS bandwidth represented by the number of resource blocks for the SRS transmission

occasion i on the active UL BWP b of the carrier f of the serving cell c and the subcarrier spacing $\mu$.

$\alpha_{SRS,b,f,c}(q_s)$ is provided by $\alpha$ (for example, alpha) for the active UL BWP b of the carrier f of the serving cell c and the subcarrier spacing $\mu$ and for the SRS resource set $q_s$.

$PL_{b,f,c}(q_d)$ is a DL path loss estimation value [dB] that is calculated by the UE by using the RS resource index $q_d$ for the active DL BWP of the serving cell c and the SRS resource set $q_s$. The RS resource index $q_d$ is a path loss reference RS (a DL RS for path loss measurement, which is provided by pathlossReferenceRS, for example) associated with the SRS resource set $q_s$, and is the SS/PBCH block index (for example, ssb-Index) or the CSI-RS resource index (for example, csi-RS-Index).

$h_{b,f,c}(i, l)$ is an SRS power control adjustment state for the active UL BWP of the carrier f of the serving cell c and for the SRS transmission occasion i. When a configuration (for example, srs-PowerControlAdjustmentStates) of the SRS power control adjustment state indicates the same power control adjustment state for SRS transmission and PUSCH transmission, $h_{b,f,c}(i, l)$ is the same as the current PUSCH power control adjustment state $f_{b,f,c}(i, l)$.

The transmission occasion i of the PUSCH, the PUCCH, and the SRS may be defined by a slot index $n_{s,f}^{\mu}$ in a frame of a system frame number SFN, a first symbol S in a slot, and the number L of consecutive symbols. In a case of PUSCH transmission of repetition type B, the transmission occasion of the PUSCH may be nominal repetition.

(Power Requirement)

In NR, measures against a problem of maximum permitted exposure (MPE) (or electromagnetic power density exposure) have been under study. The UE is required to meet regulations of Federal Communication Commission (FCC) related to maximum radiation to human bodies for the sake of health and safety.

For example, in Rel-15 NR, to limit exposure (exposure), limitation using power-management maximum power reduction (P-MPR/PMPR, maximum permitted UE output power reduction) is defined. For example, in a case of non-carrier aggregation (CA), the UE maximum output power $P_{CMAX,f,c}$ is configured so that corresponding $P_{UMAX,f,c}$ (maximum output power to be measured, configured maximum UE output power to be measured) satisfies the following expression (4).

$$P_{Powerclass} + \Delta P_{LBE} - MAX(MAX(MPR_{f.c}, A\text{-} MPR_{f.c},) + \Delta MB_{P,n}, P\text{-}MPR_{f.c}) - MAX\{T(MAX(MPR_{f.c}, A\text{-} MPR_{f.c},)), T(P\text{-}MPR_{f.c})\} \leq P_{UMAX.f.c} \leq EIRP_{max} \quad (4)$$

$EIRP_{max}$ is a maximum value of corresponding measured peak effective isotropic radiated power (EIRP). $P\text{-}MPR_{f,c}$ is a value indicating reduction of maximum output power permitted for the carrier f of the serving cell c. $P\text{-}MPR_{f,c}$ is introduced into the expression of the UE maximum output power $P_{CMAX,f,c}$ configured for the carrier f of the serving cell c. Corresponding total radiated power $P_{TMAX,f,c}$ satisfies $P_{TMAX,f,c} \leq TRP_{max}$.

In a case of carrier aggregation (CA), the UE maximum output power $P_{CMAX,f,c}$ is configured so that corresponding $P_{UMAX,f,c}$ satisfies the following expression (5).

$$P_{Powerclass} - MAX(MAX(MPR, A\text{-}MPR) + \Delta MB_{P,n}, P\text{-}MPR) - MAX\{T(MAX(MPR, A\text{-}MPR)), T(P\text{-}MPR)\} \leq P_{UMAX} \leq EIRP_{max} \quad (5)$$

Measured $P_{UMAX}$ for carrier aggregation is defined as follows: $P_{UMAX} = \Sigma_{c,f(c)} P_{UMAX,f,c}$. Here, $P_{UMAX,f,c}$ is a linear value of measured power $P_{UMAX,f,c}$ for carrier f = f(c) of the serving cell c. The measured total radiated power $P_{TMAX}$ for carrier aggregation is defined as follows: $P_{TMAX} = 10\log_{10}\Sigma_{c,f(c)} P_{TMAX,f,c}$. Here, $P_{TMAX}$ is a linear value of the measurement value of the total radiated power $P_{TMAX,f,c}$ for carrier f = f(c) of the serving cell c. For the total radiated power $P_{TMAX}$, a boundary is defined as follows: $P_{TMAX} \leq TRP_{max}$.

In other words, the UE can configure the maximum output power as $P_{CMAX}$ so that the measured peak EIRP ($P_{UMAX}$) is within a range between a lower limit and an upper limit and the measured total radiated power $P_{TMAX}$ satisfies $P_{TMAX} \leq TRP_{max}$.

(PHR)

In future radio communication systems (for example, NR), the UE transmits a PH report (Power Headroom Report (PHR)) including information of power headroom (PH) for each serving cell to a network. The network can use the PHR for control of uplink transmission power of the UE.

When an M-TRP PUSCH is supported/configured/enabled, and reporting of two PHRs for two TRPs is

configured/enabled, it is studied to include the two PHRs (a first PHR and a second PHR) in a PHR MAC CE. Reporting of two PHRs for two TRPs may be configured for the UE by a higher layer parameter (RRC parameter).

Here, the first PHR may be reported similarly to Rel. 15/16. The second PHR may be a PHR of a TRP different from that of the first PHR. The second PHR may be reported as an actual PHR, or may be reported as a virtual PHR.

The actual PHR is a PHR based on actual PUSCH transmission, and may be referred to as a real PHR. The actual PHR may be calculated based on power control parameters for actual PUSCH transmission.

The virtual PHR is a PHR independent of actual PUSCH transmission (based on reference PUSCH transmission), and may be referred to as a reference PHR, a PHR conforming to a reference format, or the like. The virtual PHR may be calculated based on default power control parameters already defined in Rel-15/16 NR, or may be calculated based on new default power control parameters.

When the UE determines that a type 1 power headroom report of an active serving cell is based on actual PUSCH transmission, the UE calculates the type 1 power headroom report as in the following expression (6) for the PUSCH transmission occasion i on the active UL BWP b of the carrier f of the serving cell c. The PHR of expression (6) may be referred to as the actual PHR.

$$PH_{\mathrm{type1}b,f,c}(i,j,q_d,l) = P_{\mathrm{CMAX},f,c}(i) - \left\{ P_{\mathrm{O_PUSCH}b,f,c}(j) + 10\log_{10}(2^{\mu}\cdot M^{\mathrm{PUSCH}}_{\mathrm{RB},b,f,c}(i)) + \alpha_{b,f,c}(j)\cdot PL_{b,f,c}(q_d) + \Delta_{\mathrm{TF},b,f,c}(i) + f_{b,f,c}(i,l) \right\} \text{ [dB]} \quad (6)$$

When the UE determines that the type 1 power headroom report of the active serving cell is based on reference PUSCH transmission, the UE calculates the type 1 power headroom report as in the following expression (7) for the PUSCH transmission occasion i on the active UL BWP b of the carrier f of the serving cell c. The PHR of expression (7) may be referred to as the virtual PHR.

$$PH_{\mathrm{type1}b,f,c}(i,j,q_d,l) = \tilde{P}_{\mathrm{CMAX},f,c}(i) - \left\{ P_{\mathrm{O_PUSCH}b,f,c}(j) + \alpha_{b,f,c}(j)\cdot PL_{b,f,c}(q_d) + f_{b,f,c}(i,l) \right\} \text{ [dB]} \quad (7)$$

Here, $P_{CMAX,f,c}(i)$ bar ($P_{CMAX,f,c}(i)$ with ~ being added above P) is calculated on the assumption that MPR = 0 dB, A-MPR = 0 dB, P-MPR = 0 dB, and $\Delta T_C$ = 0 dB. A-MPR means Additional MPR. Regarding the remaining parameters, for $P_{O_PUSCH,b,f,c}(j)$ and $\alpha_{b,f,c}(j)$, $P_{O_NOMINAL_PUSCH,f,c}(0)$ and p0-PUSCH-AlphaSetId = 0 are used, and for $PL_{b,f,c}(q_d)$, pusch-PathlossReferenceRS-Id = 0 and l = 0 are used.

(Maximum Transmission Power)

A configuration example of maximum transmission power $P_{CMAXpanel,f,c,p}$ in a panel p of the carrier f of the serving cell c will be described. $PC_{MAXpanel,f,c,p}$ may be represented as $P_{CMAX,f,c,p}$.

<<Option 0>>

The UE may receive a configuration (for example, a configuration similar to that of Rel. 17) related to maximum transmission power of each serving cell and each carrier, and determine the maximum transmission power of each panel based on the configuration. For example, the maximum transmission power of the carrier f of the serving cell c may be configured as $P_{CMAX,f,c}$, and the UE may determine the maximum transmission power $P_{CMAX,f,c,p}$ of each panel p based on $P_{CMAX,f,c}$, or may determine the maximum transmission power $P_{CMAX,f,c,p}$ based on a relationship between $P_{CMAX,f,c}$ and $P_{CMAX,f,c,p}$. $PC_{MAX,f,c}$ and the relationship may be configured for the UE by higher layer signaling/physical layer signaling. For the maximum transmission power of each panel in this case, the following examples are given.

<<Option 0-1>>

The UE may determine the maximum transmission power $P_{CMAX,f,c,p}$ of the panel p, based on the following expression (8). N is the number of panels for which simultaneous transmission is indicated. In other words, the maximum transmission power of each panel may be the same.

$$P_{CMAX,f,c} = N \cdot P_{CMAX_{panel},f,c,p} \quad (8)$$

For example, when multi-panel simultaneous transmission is indicated, N may be 2. When single-panel transmission is indicated, N may be 1. Alternatively, N may follow at least one of a value configured by higher layer signaling/physical layer signaling from the network (base station) and a UE capability. Different values may be applied to N between the case of single-panel transmission and the case of multi-panel transmission. Alternatively, N may be the maximum number of panels (for example, N = 2) supported by the UE in UL transmission, and application of single-panel transmission or simultaneous multi-panel transmission need not be indicated from the network.

<<Option 0-2>>

The UE may determine the maximum transmission power $P_{CMAX,f,c,p}$ of the panel p, based on the following expression (9). In other words, the total maximum transmission power of the maximum transmission power of each panel p may be the maximum transmission power of the UE. Np is a value for the panel p, and may be different for each panel. In other words, the maximum transmission power of each panel may be different.

$$P_{CMAX,f,c} = N_p \cdot P_{CMAX_{panel},f,c,p} \quad (9)$$

Np may follow at least one of a value configured by higher layer signaling/physical layer signaling from the network (base station) and a UE capability. Different values may be applied to Np between the case of single-panel transmission and the case of multi-panel transmission.

<<Option 0-3>>

The UE may determine the maximum transmission power $P_{CMAX,f,c,p}$ of the panel p, based on the following expression (10). In other words, the total maximum transmission power of the maximum transmission power of each panel p may be the maximum transmission power of the UE. In this case, the maximum transmission power of each panel may be the same or may be different, or the maximum transmission power of some panels may be the same.

$$P_{CMAX,f,c} = \sum_p P_{CMAX_{panel},f,c,p} \quad (10)$$

This clarifies the maximum transmission power in the panel p, the maximum transmission power of all the panels, and a relationship therebetween, and the UE can control simultaneous UL transmission of the multi-panel by using appropriate transmission power.

(Reporting of M-TRP PHR of Rel. 17)

In M-TRP PUSCH repetition of Rel. 17, when the PHR MAC CE is reported in a slot n, the first PHR for the first TRP is reported similarly to Rel. 16. The second PHR for the second TRP may be defined as in the following (1) to (3).

(1) When the first PHR is the actual PHR, and PUSCH repetition related to the second TRP is present in the slot n, the second PHR is the actual PHR.
(2) When the first PHR is the actual PHR, and PUSCH repetition related to the second TRP is not present in the slot n, the second PHR is the virtual PHR.
(3) When the first PHR is the virtual PHR, the second PHR is the virtual PHR.

The virtual PHR may be calculated by using the default power control parameters (p0, alpha ($\alpha$), PL-RS, and closedloopindex) of each TRP.

When the UE is provided with twoPHRMode in the active UL BWP b of the carrier f of the serving cell c, and provided with two SRS resource sets whose usage is configured to the "codebook" or the "non-codebook (nonCodebook)"

in srs-ResourceSetToAddModList or srs-ResourceSetToAddModListDCI-0-2, the UE provides two types of first power headroom reports of the following (1) and (2). In (1) and (2), it is assumed that the UE provides a first type 1 PHR for actual PUSCH repetition of the earliest-starting PUSCH transmission in the slot associated with one SRS resource set.

(1) When the UE transmits PUSCH repetition related to another SRS resource set in the slot n, the UE provides a second type 1 power headroom report for the first actual PUSCH repetition related to another SRS resource set overlapping the slot n.
(2) Otherwise (when the condition of (1) is not satisfied), the UE provides a second type 1 power headroom report for reference PUSCH transmission associated with another SRS resource set.

(UE Capability etc.)

In the present disclosure, the "panel" may indicate a value (set of values) of UE capability, similarly to Rel. 17. The "panel" may indicate definition equivalent to other terms, such as a "UE antenna group".
The beam may indicate spatial relation/TCI/spatial relation information (SRI). The TRP may refer to CORESETPool/SRS resource set.
In simultaneous multi-panel transmission (Simultaneous multi-panel Tx (STxMP)), the following schemes may be applied.

- Single DCI (S-DCI) space division multiplexing (SDM) scheme: Different layers/DMRS ports of one PUSCH are separately precoded, and are simultaneously transmitted from different UE beams/panels.
- S-DCI frequency division multiplexing (FDM)-A scheme: Different parts of frequency domain resources of a transmission occasion of one PUSCH are transmitted from different UE beams/panels.
- S-DCI FDM-B scheme: A scheme in which two PUSCH transmission occasions having the same/different RV(s) of the same TB are transmitted from different UE beams/panels on non-overlapping frequency domain resources and the same time domain resources.
- S-DCI SFN-based transmission scheme: The same PUSCH/DMRS is simultaneously transmitted from two different UE beams/panels.
- S-DCI spatial domain repetition scheme: Two PUSCH transmission occasions having different redundancy versions (RVs) of the same TB are transmitted from two different UE beams/panels on the same time and frequency resources.
- M-DCI scheme: A scheme in which two overlapping PUSCHs (fully/partially overlapping in the time domain, fully/partially overlapping or not overlapping in the frequency domain) are transmitted from two different UE beams/panels.

Simultaneous multi-panel transmission assumes the multi-TRP, and it is considered that one panel corresponds to one TRP. Thus, in the present disclosure, a PUSCH related to a panel may be referred to as a PUSCH related to a TRP, and a PHR/power of a panel may be referred to as a PHR/power of a TRP.
In the present disclosure, it is considered that the UE receives the PUSCH/SRS in one panel, and receives the PUCCH/SRS (performs simultaneous multi-panel reception) in time resources fully/partially overlapping PUSCH reception of another panel.
"Single-panel transmission" in the present disclosure may be applied only when there is PUSCH transmission with a single panel and there is no PUCCH/SRS transmission in other panels on time resources fully/partially overlapping the PUSCH transmission. Note that, in this case, how to handle PHR reporting requires further study, such as reporting one type 1 PHR based on the PUSCH and one type 3PHR based on the SRS, in a case of PUSCH+SRS, for example.
Alternatively, "single-panel transmission" in the present disclosure may also be applied when there is PUSCH transmission with a single panel and there is PUCCH/SRS transmission with another panel in time resources fully/partially overlapping the PUSCH transmission.

(Assumptions of Multi-Panel Simultaneous UL Transmission)

In a case of multi-panel simultaneous UL transmission, considering limitation of the maximum UL transmission power, at least one of the following assumptions 1-1 to 1-3 is assumed.

{Assumption 1-1}

The maximum UL transmission power of each panel is considered. It is assumed that the actual transmission power of the PUSCH/PUCCH/SRS of the panel p in the serving cell c is equal to or less than the maximum UL transmission power of the panel p in the serving cell c. In other words, $P_{panel_actual,c,p} \leq P_{panel_max,c,p}$ holds. The maximum UL

transmission power of the panel p in the serving cell c may be calculated by one of expressions (8) to (10) of the above (maximum transmission power). Note that the element of the carrier f may be removed when the carrier is not specified.

$P_{panel_actual,c,p}$ is the actual transmission power of the serving cell c and the panel p, and $P_{panel_max,c,p}$ is the maximum UL transmission power of the serving cell c and the panel p.

{Assumption 1-2}

The maximum UL transmission power of each cell is considered. It is assumed that the total actual transmission power of the PUSCH/PUCCH/SRS from a plurality of panels of the serving cell c is equal to or less than the maximum UL transmission power of the serving cell c. In other words, $\Sigma_p P_{panel_actual,c,p} \leq P_{cell_max,c}$ holds. Note that the maximum UL transmission power of the serving cell c may be a value (i.e., $P_{CMAX,f,c}$) determined in Rel. 17. $Pp_{anel_actual,c,p}$ is the actual transmission power of the panel p of the serving cell c, and $P_{cell_max,c}$ is the maximum UL transmission power of the serving cell c.

{Assumption 1-3}

Both of the maximum UL transmission power of each panel and the maximum transmission power of each cell may be considered. The transmission power may satisfy both the conditions of assumption 1 and assumption 2.

(Assumptions of Single-Panel UL Transmission)

When dynamic switching between single-panel transmission and multi-panel simultaneous transmission is supported, considering limitation of the maximum UL transmission power, at least one of the following assumptions 2-1 and 2-2 is assumed.

{Assumption 2-1}

The maximum UL transmission power of each panel is considered. It is assumed that the actual transmission power of the PUSCH/PUCCH/SRS of single-panel transmission in the panel p in the serving cell c is equal to or less than the maximum UL transmission power of the panel p in the serving cell c. In other words, $P_{panel_actual,c,p} \leq P_{panel_max,c,p}$ holds.

$P_{panel_actual,c,p}$ is the actual transmission power of the serving cell c and the panel p, and $P_{panel_max,c,p}$ is the maximum UL transmission power of the serving cell c and the panel p.

{Assumption 2-2}

The maximum UL transmission power of each cell is considered. It is assumed that the total actual transmission power of the PUSCH/PUCCH/SRS from a single panel of the serving cell c is equal to or less than the maximum UL transmission power of the serving cell c. In other words, $P_{panel_actual,c,p} \leq P_{cell_max,c}$ holds. Note that the maximum UL transmission power of the serving cell c may be a value (i.e., $P_{CMAX,f,c}$) determined in Rel. 17.

$P_{panel_actual,c,p}$ is the actual transmission power of the panel p of the serving cell c, and $P_{cell_max,c}$ is the maximum UL transmission power of the serving cell c.

Note that, in a case of single-panel transmission, assumption 2-1 and assumption 2-2 are the same if $P_{panel_max,c,p}$ and $P_{cell_max,c}$ are the same.

(Triggers of PHR)

In legacy specifications (for example, Rel. 17), the PHR may be triggered based on at least one of the following events/conditions:

- When a PHR prohibit timer (phr-ProhibitTimer) expires/the timer has expired, and the MAC entity has UL resources for new transmission, and path loss changes by more than a certain threshold (phr-Tx-PowerFactorChange (dB)) for at least one reference signal used as a path loss reference for one activated serving cell corresponding to any MAC entity for which the active DL BWP is not a dormant BWP at or after the last transmission of the PHR in the MAC entity.
- When a PHR periodic timer (phr-PeriodicTimer) expires.
- When a function of the PHR is configured/reconfigured by higher layer signaling (note that the higher layer signaling need not be used to disable the function of the PHR).
- When an SCell corresponding to the MAC entity configured with the UL for which firstActiveDownlinkBWP-Id is not set

to a dormant BWP is activated.

- When an SCG is activated.
- When a PSCell is added (i.e., a PSCell is newly added/changed) except when an SCG is deactivated.
- When a PHR prohibit timer (phr-ProhibitTimer) expires/the timer has expired, and the MAC entity has UL resources for new transmission, and the following is satisfied for an activated serving cell corresponding to any MAC entity configured with the UL.
- When there are UL resources allocated for transmission/PUCCH transmission in the cell (the above-described activated serving cell), and required power backoff for power management for the cell changes by more than the certain threshold (phr-Tx-PowerFactorChange (dB)) at or after the last transmission of the PHR.
- When an activated dormant BWP of an SCell corresponding to any MAC entity configured with the UL is switched to a non-dormant BWP.
- When a higher layer parameter mpe-Reporting-FR2 is configured, and an MPE prohibit timer (mpe-ProhibitTimer) is not running.
- When a measurement value of PMPR applied to satisfy MPE requirements of FR2 is equal to or greater than a certain threshold (mpe-Threshold) for at least one active FR2 serving cell at or after the last transmission of the PHR in a certain MAC entity.
- When a measurement value of PMPR applied to satisfy MPE requirements of FR2 changes by more than the certain threshold (phr-Tx-PowerFactorChange (dB)) for at least one active FR2 serving cell at or after the last transmission of the PHR in a certain MAC entity. Note that, in the present case, the PHR may be referred to as an "MPE P-MPR report".

(Type 1 PH Report)

In the active UL BWP b of the carrier f of the serving cell c, when the UE is provided with the two-PHR mode (twoPHRMode), and provided with two SRS resource sets in srs-ResourceSetToAddModList or srs-ResourceSetToAddModListDCI-0-2 whose usage is set to the codebook/non-codebook, the UE provides two type 1 power headroom reports in the slot n.

Here,

- when the UE provides the first type 1 power headroom report for actual PUSCH repetition of the earliest-started PUSCH transmission in the slot n associated with one SRS resource set, and
- when the UE transmits PUSCH repetition associated with another SRS resource set in the slot n,

  the UE provides the second type 1 power headroom report for the first actual PUSCH repetition associated with another SRS resource set overlapping the slot n.

Otherwise, the UE provides the second type 1 power headroom report for reference PUSCH transmission associated with another SRS resource set.

Here, when the UE is provided with dl-OrJointTCI-StateList or the UL TCI state (TCI-UL-State), and indicated with a first TCI state/UL TCI state and a second TCI state/UL TCI state, the UE provides the second type 1 power headroom report by using the value of p0AlphaSetforPUSCH and the value of pathlossReferenceRS-Id-r17 associated with the first TCI state/UL TCI state.

For the active UL BWP b of the carrier f of the serving cell c, when the UE is

- provided with the two-PHR mode (twoPHRMode),
- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with the multi-panel scheme (multipanelScheme),

  the UE may provide at least one of the following.

- The type 1 power headroom report associated with the first TCI state/UL TCI state and configured maximum output power for actual PUSCH transmission using the spatial domain filter corresponding only to the first TCI state/UL TCI state.
- The type 1 power headroom report associated with the second TCI state/UL TCI state and configured maximum output power for actual PUSCH transmission using the spatial domain filter corresponding only to the second TCI state/UL TCI state.
- The type 1 power headroom report associated with the first TCI state/UL TCI state and configured maximum output power and the type 1 power headroom report associated with the second TCI state/UL TCI state and configured maximum output power for actual PUSCH transmission using the spatial domain filter corresponding to the first TCI

state/UL TCI state and using the spatial domain filter corresponding to the second TCI state/UL TCI state.

(Analysis)

<Analysis 1>

Incidentally, the PHR for multi-TRP repetition of Rel. 17 when the unified TCI framework is applied is under study. For example, when the UE provides the PHR for reference PUSCH transmission associated with the first/second SRS resource set (first/second TCI state), the UE uses the values of p0AlphaSetforPUSCH and pathlossReferenceRS-Id-r17 associated with the first/second TCI state.

Here, when the UE is indicated with two TCI states, the function related to the PHR described above needs to be enhanced in each of the following cases.

- When the UE is provided with the two-PHR mode (twoPHRMode) in STxMP of the single-DCI PUSCH SDM/SFN scheme.
- When the UE is provided with the two-PHR mode (twoPHRMode) in STxMP of the multi-DCI (overlapping) PUSCH+PUSCH scheme.

In other words, the definition related to the PHR should be further enhanced according to the type of simultaneous multi-panel transmission.

<Analysis 2>

In legacy specifications, in the PHR for reference PUSCH transmission to which the unified TCI framework is applied, power control parameters (PC parameters) associated with the indicated TCI state are used. In other words, unlike analysis 1 described above, when the UE is not configured with the two-PHR mode (twoPHRMode), parameters in a single TRP/multi-TRP are applied.

Here, when the UE is indicated with the first TCI state/UL TCI state and the second TCI state/UL TCI state, it is necessary to clarify which power control parameter configuration associated with the first/second indicated TCI state the UE should use.

<Analysis 3>

In legacy specifications, in multi-TRP repetition of Rel. 17, when the UE is not indicated with the two-PHR mode (twoPHRMode), and the UE provides the type 1 PHR for actual PUSCH repetition in the slot n, the PHR is a PHR for first PUSCH repetition overlapping the slot n.

A similar case may also be present in single-DCI-based STxMP (single-DCI PUSCH SDM/SFN scheme).

Specifically, when the UE is not provided with the two-PHR mode (twoPHRMode), the UE provides one type 1 PHR in the slot n.

If the type 1 PHR is a PHR for actual PUSCH transmission, and the PUSCH transmission applies both of the first/second TCI state (i.e., is associated with both of the first/second SRS resource set), it is necessary to clarify which PHR for PUSCH transmission associated with the TCI state (SRS resource set) the PHR is.

A similar case may also be present in multi-DCI-based STxMP (multi-DCI overlapping PUSCH+PUSCH scheme).

Specifically, when the UE is not provided with the two-PHR mode (twoPHRMode), the UE provides one type 1 PHR in the slot n.

If the type 1 PHR is a PHR for actual PUSCH transmission, and there is time in which two PUSCH transmissions overlap in the slot n, it is necessary to clarify which of the first/second TCI state (i.e., the first/second SRS resource set or the first/second CORESET pool index) the two PUSCH transmissions apply, and which PHR for PUSCH transmission associated with the TCI state (the SRS resource set or the CORESET pool index) the PHR is.

In this manner, unless the definition (control method) related to the PHR is clarified, transmission control may not be appropriately performed, and communication throughput may decrease.

In view of this, the inventors of the present invention came up with the idea of a control method for the PHR according to a scenario to be applied.

Embodiments according to the present disclosure will be described in detail with reference to the drawings as follows. The radio communication methods according to respective embodiments may each be employed individually, or may be employed in combination.

(Various Interpretations etc.)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

In the present disclosure, multi-panel simultaneous transmission (simultaneous multi-panel transmission) and multi-panel simultaneous UL transmission (simultaneous multi-panel UL transmission) may be interchangeably interpreted. In the present disclosure, to support and to be configured/indicated may be interchangeably interpreted. In the present disclosure, a loop, a power control loop, a power control loop index, a closed loop, an open loop, and a power control adjustment state may be interchangeably interpreted. In the present disclosure, transmission power and output power may be interchangeably interpreted.

Power limitation of the present disclosure may mean limitation by maximum transmission power. A PHR of the present disclosure may mean an actual PHR, a virtual PHR, or both of an actual PHR and a virtual PHR, unless otherwise specifically limited. p and q of the present disclosure may mean panel indices.

In the present disclosure, a multi-TRP (an MTRP, an M-TRP), a multi-TRP system, multi-TRP transmission, a multi-PDSCH, and a multi-PUSCH may be interchangeably interpreted.

In the present disclosure, a "PHR", "PH", a "PH field", a "PH value", and the like may be interchangeably interpreted. In the present disclosure, a PH field may be interchangeably interpreted as a PH field of a certain type (for example, type 1/2/3/X).

Note that, in the present disclosure, a PHR MAC CE may include fields (a PCMAX field, a P field, and the like) respectively for a plurality of serving cells.

A "PCMAX field/P-MPR value/power backoff of (/for/corresponding to) a PH field" in the present disclosure may be interchangeably interpreted as a "PCMAX field/P-MPR value/power backoff of (/for/corresponding to) PUSCH transmission corresponding to a PH field".

In the present disclosure, P-MPR, a P-MPR value, and power backoff may be interchangeably interpreted.

In the present disclosure, UL transmission (UL Tx)/PHR related to a panel and UL transmission (UL Tx)/PHR related to a TRP may be interchangeably interpreted.

In the present disclosure, multipanelScheme and enableSTx2PofmDCI may be interchangeably interpreted as information (parameters) related to multi-panel transmission.

(Radio Communication Method)

<First Embodiment>

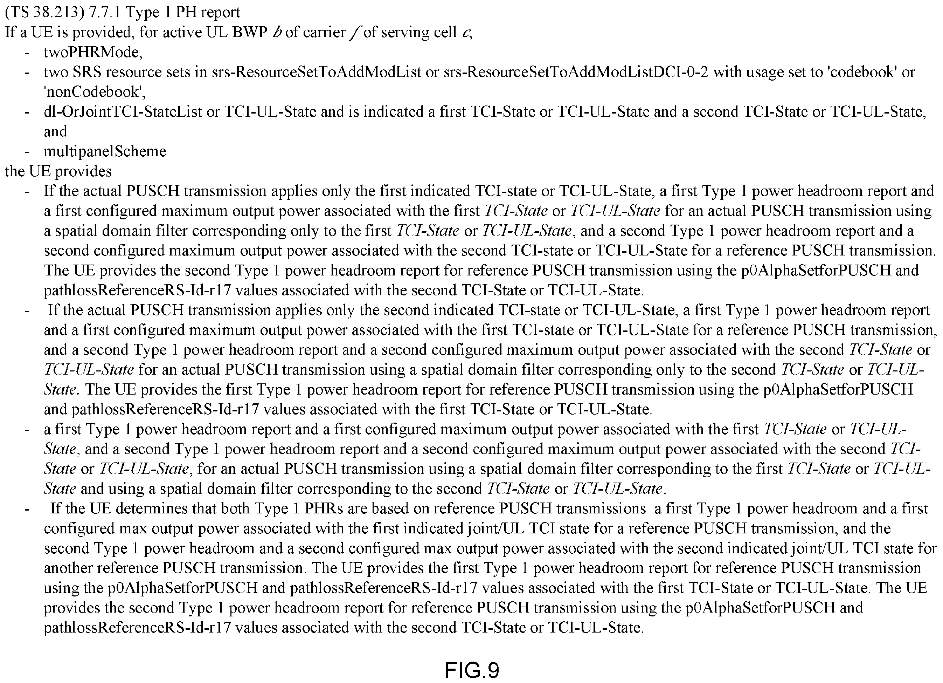

A first embodiment corresponds to analysis 1, and relates to a case in which the UE is indicated with two TCI states (for example, provided with the two-PHR mode (twoPHRMode)). FIG. 9 is a diagram to show a description example of a specification related to the type 1 power headroom report according to the first embodiment.

For the active UL BWP b of the carrier f of the serving cell c, when the UE is

- provided with the two-PHR mode (twoPHRMode),
- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with the multi-panel scheme (multipanelScheme),

  when the UE provides the PHR for reference PUSCH transmission associated with the first/second SRS resource set (first/second TCI state), the UE may provide the following PHR by using the value of p0AlphaSetforPUSCH and the value of pathlossReferenceRS-Id-r17 associated with the first TCI state/UL TCI state.

More specifically, when the UE is provided/indicated with the contents described above, the UE may provide at least one of the following (see FIG. 9).

<Option 1>

When actual PUSCH transmission applies only the first TCI state/UL TCI state, the first type 1 power headroom report and first configured maximum output power associated with the first TCI state/UL TCI state for actual PUSCH transmission using the spatial domain filter corresponding only to the first TCI state/UL TCI state and the second type 1 power headroom report and second configured maximum output power associated with the second TCI state/UL TCI state for reference PUSCH transmission.

In option 1, the UE may provide the second type 1 power headroom report for reference PUSCH transmission by using the value of p0AlphaSetforPUSCH and the value of pathlossReferenceRS-Id-r17 associated with the second TCI state/UL TCI state.

<Option 2>

When actual PUSCH transmission applies only the second TCI state/UL TCI state, the first type 1 power headroom report and first configured maximum output power associated with the first TCI state/UL TCI state for reference PUSCH transmission and the second type 1 power headroom report and second configured maximum output power associated with the second TCI state/UL TCI state for actual PUSCH transmission using the spatial domain filter corresponding only to the second TCI state/UL TCI state.

In option 2, the UE may provide the first type 1 power headroom report for reference PUSCH transmission by using the value of p0AlphaSetforPUSCH and the value of pathlossReferenceRS-Id-r17 associated with the first TCI state/UL TCI state.

<Option 3>

The first type 1 power headroom report and first configured maximum output power associated with the first TCI state/UL TCI state and the second type 1 power headroom report and second configured maximum output power associated with the second TCI state/UL TCI state for actual PUSCH transmission using the spatial domain filter

corresponding to the first TCI state/UL TCI state and using the spatial domain filter corresponding to the second TCI state/UL TCI state.

<Option 4>

When the UE determines that both the (first/second) type 1 power headroom reports (PHRs) are based on reference PUSCH transmission, the first type 1 power headroom report and first configured maximum output power associated with the first indicated joint/UL TCI state for reference PUSCH transmission and the second type 1 power headroom report and second configured maximum output power associated with the second indicated joint/UL TCI state for another reference PUSCH transmission.

In option 4, the UE may provide the first type 1 power headroom report for reference PUSCH transmission by using the value of p0AlphaSetforPUSCH and the value of pathlossReferenceRS-Id-r17 associated with the first TCI state/UL TCI state. The UE may provide the second type 1 power headroom report for reference PUSCH transmission by using the value of p0AlphaSetforPUSCH and the value of pathlossReferenceRS-Id-r17 associated with the second TCI state/UL TCI state.

According to the first embodiment described above, in simultaneous multi-panel transmission, when the UE is indicated with two TCI states (for example, provided with the two-PHR mode (twoPHRMode)), the UE can appropriately control the PHR.

<Second Embodiment>

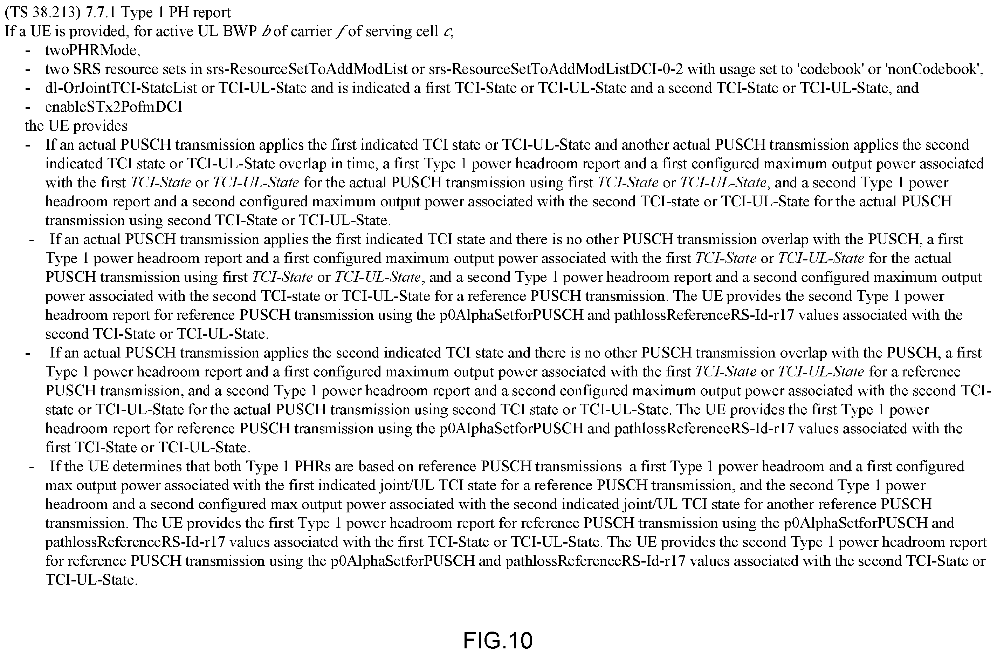

A second embodiment corresponds to analysis 1, and relates to a case in which the UE is indicated with two TCI states (for example, configured/indicated with two CORESET pool indices). FIG. 10 is a diagram to show a description example of a specification related to the type 1 power headroom report according to the second embodiment.

For the active UL BWP b of the carrier f of the serving cell c, when the UE is

- provided with the two-PHR mode (twoPHRMode),
- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with enableSTx2PofmDCI,
  when the UE provides the PHR for reference PUSCH transmission associated with the first/second SRS resource set (the first/second TCI state or the first/second CORESET pool index), the UE may provide the following PHR by using the value of p0AlphaSetforPUSCH and the value of pathlossReferenceRS-Id-r17 associated with the first/second TCI state/UL TCI state.

More specifically, when the UE is provided/indicated with the contents described above, the UE may provide at least one of the following (see FIG. 10).

<Option 1>

When actual PUSCH transmission applies the first indicated TCI state/UL TCI state, and another actual PUSCH transmission applying the second indicated TCI state/UL TCI state overlaps in time, the first type 1 power headroom report and first configured maximum output power associated with the first TCI state/UL TCI state for actual PUSCH transmission using the first TCI state/UL TCI state and the second type 1 power headroom report and second configured maximum output power associated with the second TCI state/UL TCI state for actual PUSCH transmission using the second TCI state/UL TCI state.

<Option 2>

When actual PUSCH transmission applies the first indicated TCI state, and there is no other PUSCH transmission overlapping with the PUSCH, the first type 1 power headroom report and first configured maximum output power associated with the first TCI state/UL TCI state for actual PUSCH transmission using the first TCI state/UL TCI state and the second type 1 power headroom report and second configured maximum output power associated with the second TCI state/UL TCI state for reference PUSCH transmission.

In option 2, the UE may provide the second type 1 power headroom report for reference PUSCH transmission by using the value of p0AlphaSetforPUSCH and the value of pathlossReferenceRS-Id-r17 associated with the second TCI

state/UL TCI state.

<Option 3>

When actual PUSCH transmission applies the second indicated TCI state, and there is no other PUSCH transmission overlapping with the PUSCH, the first type 1 power headroom report and first configured maximum output power associated with the first TCI state/UL TCI state for reference PUSCH transmission and the second type 1 power headroom report and second configured maximum output power associated with the second TCI state/UL TCI state for actual PUSCH transmission using the second TCI state/UL TCI state.

In option 3, the UE may provide the first type 1 power headroom report for reference PUSCH transmission by using the value of p0AlphaSetforPUSCH and the value of pathlossReferenceRS-Id-r17 associated with the first TCI state/UL TCI state.

<Option 4>

When the UE determines that both the (first/second) type 1 power headroom reports (PHRs) are based on reference PUSCH transmission, the first type 1 power headroom report and first configured maximum output power associated with the first indicated joint/UL TCI state for reference PUSCH transmission and the second type 1 power headroom report and second configured maximum output power associated with the second indicated joint/UL TCI state for another reference PUSCH transmission.

In option 4, the UE may provide the first type 1 power headroom report for reference PUSCH transmission by using the value of p0AlphaSetforPUSCH and the value of pathlossReferenceRS-Id-r17 associated with the first TCI state/UL TCI state. The UE may provide the second type 1 power headroom report for reference PUSCH transmission by using the value of p0AlphaSetforPUSCH and the value of pathlossReferenceRS-Id-r17 associated with the second TCI state/UL TCI state.

In the second embodiment, the first/second indicated TCI state may respectively correspond to the TCI state/UL TCI state indicated specific to the value (0/1) of the CORESET pool index. In other words, the first indicated TCI state corresponds to CORESET pool index value = 0, and the second indicated TCI state corresponds to CORESET pool index value = 1.

According to the second embodiment described above, in simultaneous multi-panel transmission, when the UE is indicated with two TCI states (for example, configured/indicated with two CORESET pool indices), the UE can appropriately control the PHR.

<Third Embodiment>

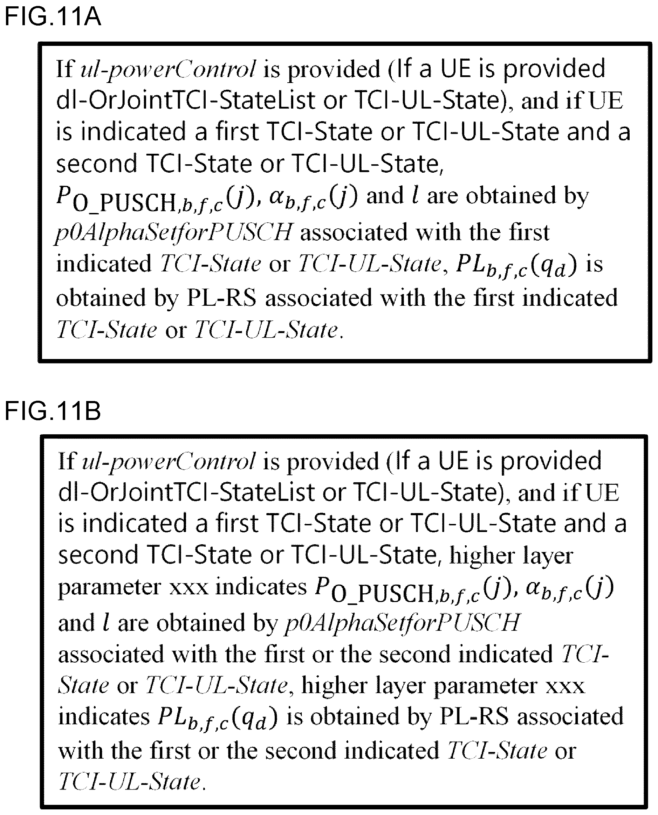

A third embodiment corresponds to analysis 2, and relates to application of the power control parameters when the UE is not configured with the two-PHR mode (twoPHRMode). FIG. 11A and FIG. 11B are diagrams to show description examples of a specification related to the type 1 power headroom report according to the third embodiment.

When the UE is provided with dl-OrJointTCI-StateList or the UL TCI state (TCI-UL-State) (and/or provided with ul-powerControl), and indicated with the first TCI state/UL TCI state and the second TCI state/UL TCI state, the parameters (for example, $P_{O_PUSCH,b,f,c}(j)$, $\alpha_{b,f,c}(j)$, and l) constituting expression (7) described above may be obtained by the value of p0AlphaSetforPUSCH associated with the first indicated TCI state/UL TCI state for the type 1 power headroom report (i.e., the virtual PHR) based on reference PUSCH transmission. Other parameters (for example, $PL_{b,f,c}(q_d)$) constituting expression (7) may be obtained by a path loss reference signal (PL-RS) associated with the first indicated TCI state/UL TCI state.

Specifically, when the UE determines that the type 1 power headroom report (PHR) for an activated serving cell is based on reference PUSCH transmission, regarding the UE calculates the type 1 power headroom report as in expression (7) described above for the PUSCH transmission occasion i on the active UL BWP b of the carrier f of the serving cell c.

Here, $P_{CMAX,f,c}(i)$ bar ($P_{CMAX,f,c}(i)$ with ~ being added above P) is calculated on the assumption that MPR = 0 dB, A-MPR = 0 dB, P-MPR = 0 dB, and $\Delta T_C$ = 0 dB. A-MPR means Additional MPR. Regarding the remaining parameters, when ul-powerControl is not provided, for $P_{O_PUSCH,b,f,c}(j)$ and $\alpha_{b,f,c}(j)$, $P_{O_NOMINAL_PUSCH,f,c}(0)$ and p0-PUSCH-Alpha-SetId = 0 are used, and for $PL_{b,f,c}(q_d)$, pusch-PathlossReferenceRS-Id = 0 and l = 0 are used.

When the UE is provided with ul-powerControl, $P_{O_PUSCH,b,f,c}(j)$, $\alpha_{b,f,c}(j)$, and l may be obtained by p0Alpha-SetforPUSCH associated with the indicated TCI state/UL TCI state, and $PL_{b,f,c}(q_d)$ may be obtained by a path loss reference signal (PL-RS) associated with the indicated TCI state/UL TCI state.

When ul-powerControl is provided (i.e., the UE is provided with dl-OrJointTCI-StateList or the UL TCI state (TCI-UL-State)), and the UE is indicated with the first TCI state/UL TCI state and the second TCI state/UL TCI state, $P_{O_PUSCH,b,f,c}(j)$, $\alpha_{b,f,c}(j)$, and l may be obtained by p0AlphaSetforPUSCH associated with the first indicated TCI state/UL

TCI state, and $PL_{b,f,c}(q_d)$ may be obtained by a path loss reference signal (PL-RS) associated with the first indicated TCI state/UL TCI state (see FIG. 11A).

The third embodiment may be applied to at least one of the following cases, in particular.

- When the UE is not provided with two SRS resource sets.
- When the UE is not provided with multipanelScheme.
- When the UE is not provided with enableSTx2PofmDCI.
- When the UE is provided with at least one of two SRS resource sets, multipanelScheme, and enableSTx2PofmDCI, but is not provided with the two-PHR mode (twoPHRMode).

{Variations}

When the UE is provided with dl-OrJointTCI-StateList or the UL TCI state (TCI-UL-State) (and/or provided with ul-powerControl), and the UE is indicated with the first TCI state/UL TCI state and the second TCI state/UL TCI state, a specific higher layer parameter may indicate whether $P_{O_PUSCH,b,f,c}(j)$, $\alpha_{b,f,c}(j)$, and l are obtained by p0AlphaSetfor-PUSCH associated with the first/second indicated TCI state/UL TCI state for the type 1 power headroom report (PHR) based on reference PUSCH transmission. A specific higher layer parameter may indicate whether $PL_{b,f,c}(q_d)$ is obtained by a path loss reference signal (PL-RS) associated with the first/second indicated TCI state/UL TCI state (see FIG. 11B).

According to the third embodiment described above, in simultaneous multi-panel transmission, when the UE is not indicated with two TCI states (for example, not configured/indicated with the two-PHR mode (twoPHRMode)), the UE can appropriately control the PHR.

<Fourth Embodiment>

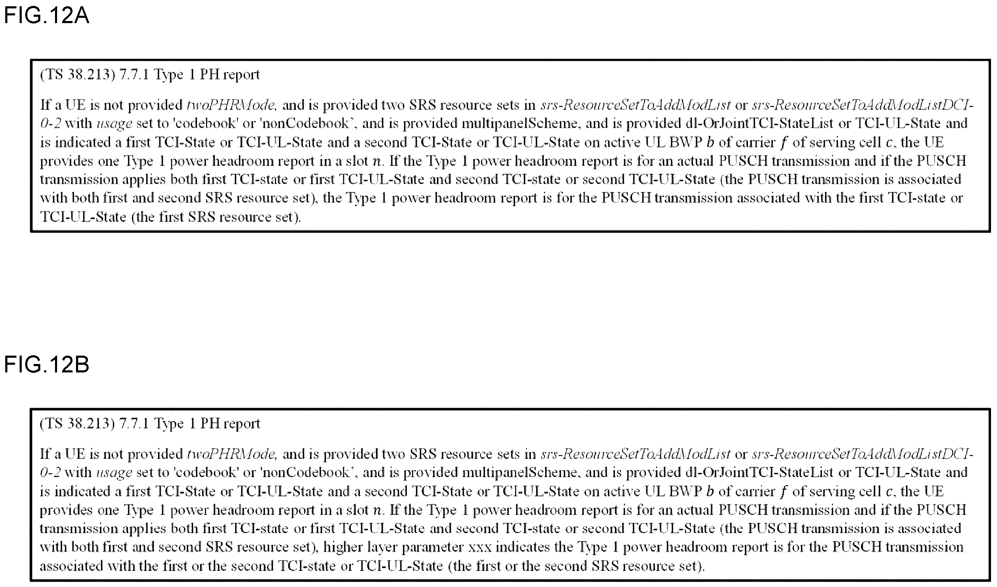

A fourth embodiment corresponds to analysis 3, and relates to the PHR for PUSCH repetition (PUSCH transmission). FIG. 12A and FIG. 12B are diagrams to show description examples of a specification related to the type 1 power headroom report according to the fourth embodiment.

For the active UL BWP b of the carrier f of the serving cell c, when the UE is

- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with the multi-panel scheme (multipanelScheme),

  when the UE is not provided with the two-PHR mode (twoPHRMode), the UE may provide one type 1 power headroom report in the slot n.

When the type 1 power headroom report is a PHR for actual PUSCH transmission, and the PUSCH transmission applies both of the first/second TCI state/UL TCI state (i.e., the PUSCH transmission is associated with both of the first/second SRS resource set), the type 1 power headroom report is a PHR for PUSCH transmission associated with the first TCI state/UL TCI state (first SRS resource set).

Specifically, when the UE is not provided with the two-PHR mode (twoPHRMode), provided with two SRS resource sets in srs-ResourceSetToAddModList or srs-ResourceSetToAddModListDCI-0-2 whose usage is set to the codebook/non-codebook, provided with the multi-panel scheme (multipanelScheme), provided with dl-OrJointTCI-State-List or the UL TCI state (TCI-UL-State), and indicated with the first TCI state/UL TCI state and the second TCI state/UL TCI state in the active UL BWP b of the carrier f of the serving cell c, the UE provides one type 1 power headroom report in the slot n (see FIG. 12A).

When the type 1 power headroom report is a PHR for actual PUSCH transmission, and the PUSCH transmission applies both of the first TCI state/UL TCI state and the second TCI state/UL TCI state (i.e., the PUSCH transmission is associated with both of the first/second SRS resource set), the type 1 power headroom report is a PHR for PUSCH transmission associated with the first TCI state/UL TCI state (first SRS resource set) (see FIG. 12A).

{Variations}

For the active UL BWP b of the carrier f of the serving cell c, when the UE is

- provided with two SRS resource sets in srs-ResourceSetToAddModList or srs-ResourceSetToAddModListDCI-0-2 whose usage is set to the codebook/non-codebook,

- provided with dl-OrJointTCI-StateList or the UL TCI state (TCI-UL-State), and indicated with the first TCI state/UL TCI state and the second TCI state/UL TCI state, and
- provided with the multi-panel scheme (multipanelScheme),
when the UE is not provided with the two-PHR mode (twoPHRMode), the UE may provide one type 1 power headroom report in the slot n.

When the type 1 power headroom report is a PHR for actual PUSCH transmission, and the PUSCH transmission applies both of the first/second TCI state/UL TCI state (i.e., the PUSCH transmission is associated with both of the first/second SRS resource set), a specific higher layer parameter may indicate whether the type 1 power headroom report is a PHR for PUSCH transmission associated with the first/second TCI state/UL TCI state (first/second SRS resource set).
Specifically, when the UE is not provided with the two-PHR mode (twoPHRMode), provided with two SRS resource sets in srs-ResourceSetToAddModList or srs-ResourceSetToAddModListDCI-0-2 whose usage is set to the codebook/non-codebook, provided with the multi-panel scheme (multipanelScheme), provided with dl-OrJointTCI-StateList or the UL TCI state (TCI-UL-State), and indicated with the first TCI state/UL TCI state and the second TCI state/UL TCI state in the active UL BWP b of the carrier f of the serving cell c, the UE provides one type 1 power headroom report in the slot n (see FIG. 12B).
When the type 1 power headroom report is a PHR for actual PUSCH transmission, and the PUSCH transmission applies both of the first TCI state/UL TCI state and the second TCI state/UL TCI state (i.e., the PUSCH transmission is associated with both of the first/second SRS resource set), a specific higher layer parameter indicates that the type 1 power headroom report is a PHR for PUSCH transmission associated with the first/second TCI state/UL TCI state (first/second SRS resource set) (see FIG. 12B).
According to the fourth embodiment described above, in simultaneous multi-panel transmission, it is possible to clarify which PHR for PUSCH transmission associated with the TCI state (SRS resource set) the PHR is.

<Fifth Embodiment>

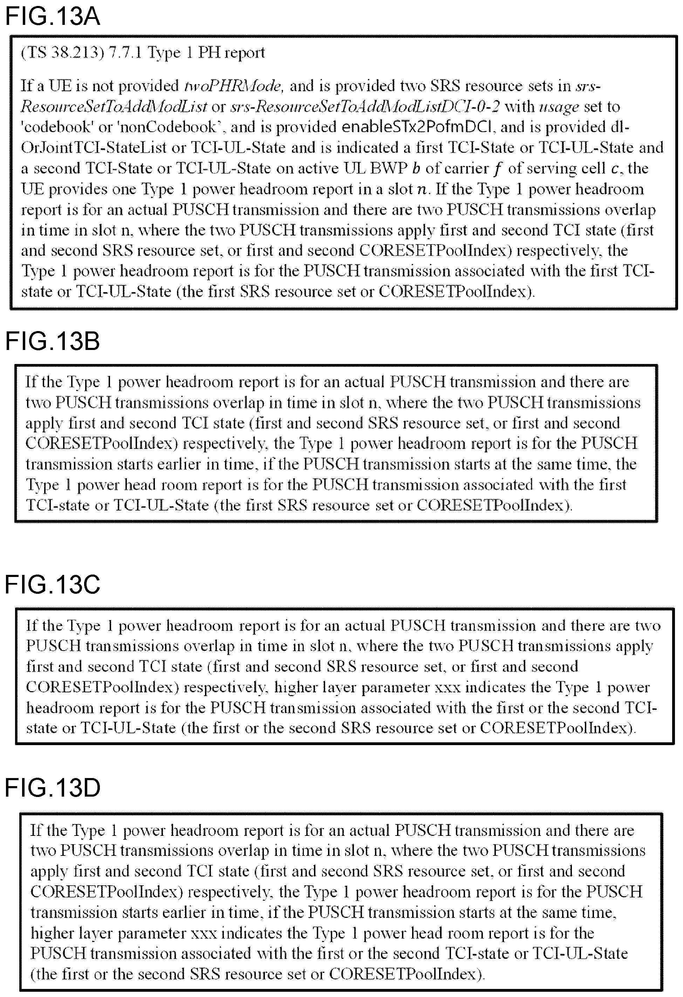

A fifth embodiment corresponds to analysis 3, and relates to the PHR for PUSCH repetition (PUSCH transmission). FIG. 13A to FIG. 13D are diagrams to show description examples of a specification related to the type 1 power headroom report according to the fifth embodiment.
For the active UL BWP b of the carrier f of the serving cell c, when the UE is

- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with enableSTx2PofmDCI,
when the UE is not provided with the two-PHR mode (twoPHRMode), the UE may provide one type 1 power headroom report in the slot n (see FIG. 13A).

When the type 1 power headroom report is a PHR for actual PUSCH transmission, there is time in which two PUSCH transmissions overlap in the slot n (overlap in time), and the two PUSCH transmissions respectively apply the first/second TCI state (i.e., the first/second SRS resource set or the first/second CORESET pool index), the type 1 power headroom report is a PHR for PUSCH transmission associated with the first TCI state/UL TCI state (the first SRS resource set or the first CORESET pool index) (see FIG. 13A).
Specifically, when the UE is not provided with the two-PHR mode (twoPHRMode), provided with two SRS resource sets in srs-ResourceSetToAddModList or srs-ResourceSetToAddModListDCI-0-2 whose usage is set to the codebook/non-codebook, provided with enableSTx2PofmDCI, provided with dl-OrJointTCI-StateList or the UL TCI state (TCI-UL-State), and indicated with the first TCI state/UL TCI state and the second TCI state/UL TCI state in the active UL BWP b of the carrier f of the serving cell c, the UE provides one type 1 power headroom report in the slot n (see FIG. 13A).
Note that the example described above may be applied when two PUSCH transmissions simultaneously start (overlap), otherwise the type 1 power headroom report may be a PHR for PUSCH transmission starting earlier among the two PUSCH transmission (see FIG. 13B).
Specifically, when the type 1 power headroom report is a PHR for actual PUSCH transmission, there is time in which two PUSCH transmissions overlap in the slot n (overlap in time), and the two PUSCH transmissions respectively apply the first/second TCI state (i.e., the first/second SRS resource set or the first/second CORESET pool index), the type 1 power headroom report may be a PHR for PUSCH transmission starting earlier in time. When two PUSCH transmissions simultaneously start, the type 1 power headroom report may be a PHR for PUSCH transmission associated with the first TCI state (i.e., the first SRS resource set or the first CORESET pool index) (see FIG. 13B).

{Variations}

For the active UL BWP b of the carrier f of the serving cell c, when the UE is

- provided with two SRS resource sets in srs-ResourceSetToAddModList or srs-ResourceSetToAddModListDCI-0-2 whose usage is set to the codebook/non-codebook,
- provided with dl-OrJointTCI-StateList or the UL TCI state (TCI-UL-State), and indicated with the first TCI state/UL TCI state and the second TCI state/UL TCI state, and
- provided with enableSTx2PofmDCI,

when the UE is not provided with the two-PHR mode (twoPHRMode), the UE may provide one type 1 power headroom report in the slot n.

When the type 1 power headroom report is a PHR for actual PUSCH transmission, there is time in which two PUSCH transmissions overlap in the slot n (overlap in time), and the two PUSCH transmissions respectively apply the first/second TCI state (i.e., the first/second SRS resource set or the first/second CORESET pool index), a specific higher layer parameter may indicate whether the type 1 power headroom report is a PHR for PUSCH transmission associated with the first/second TCI state/UL TCI state (the first/second SRS resource set or the first/second CORESET pool index) (see FIG. 13C).
Note that the example described above may be applied when two PUSCH transmissions simultaneously start (overlap), otherwise the type 1 power headroom report may be a PHR for PUSCH transmission starting earlier among the two PUSCH transmission (see FIG. 13D).
Specifically, when two PUSCH transmissions simultaneously start, a specific higher layer parameter may indicate whether the type 1 power headroom report is a PHR for PUSCH transmission associated with the first/second TCI state (i.e., the first/second SRS resource set or the first/second CORESET pool index) (see FIG. 13D).
According to the fifth embodiment described above, in simultaneous multi-panel transmission, it is possible to clarify which PHR for PUSCH transmission associated with the TCI state (for example, the CORESET pool index) the PHR is.

<Supplements>

{Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/-channel (for example, a PDCCH, a PDSCH, a reference signal), or combinations of these.
In a case where the notification described above is performed by the MAC CE, the MAC CE may be identified by a new logical channel ID (LCID) being included in a MAC sub-header, the new logical channel ID being not defined in a legacy specification.
In a case where the notification described above is performed by the DCI, the notification described above may be performed by using a specific field of the DCI, a radio network temporary identifier (RNTI) used to scramble a cyclic redundancy check (CRC) bit attached to the DCI, a format of the DCI, and the like.
Any notification of information to a UE in the above-described embodiments may be performed periodically, semi-persistently, or aperiodically.

{Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.
In a case where the notification described above is performed by the MAC CE, the MAC CE may be identified by a new LCID being included in a MAC sub-header, the new LCID being not defined in a legacy specification.
In a case where the notification described above is performed by the UCI, the notification described above may be transmitted by using a PUCCH or a PUSCH.
Any notification of information from a UE in the above-described embodiments may be performed periodically, semi-persistently, or aperiodically.

{Application of Respective Embodiments}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information regarding at least one of the embodiments described above
- supporting of multi-panel simultaneous transmission and reception by the UE
- supporting of reporting/transmission of a PHR related to multi-panel simultaneous transmission and reception by the UE
- supporting of power limitation for each panel or power limitation for each cell for simultaneous multi-panel transmission by the UE
- supporting of power limitation for each panel or power limitation for each cell for single-panel transmission by the UE (when simultaneous multi-panel transmission is supported)
- supporting of reporting of two PHRs for two panels for one serving cell by the UE

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling/physical layer signaling. For example, the specific information may be information indicating enabling of reporting/transmission of a PHR (trigger of a PHR), any RRC parameter for a specific release (for example, Rel. 18/19), or the like.

When not supporting at least one of the specific UE capabilities or not configured with the specific information, the UE may apply operation of Rel. 15/16, for example.

(Supplementary Notes)

Regarding one embodiment (first/second embodiment) of the present disclosure, the following supplementary notes of the invention will be given.

{Supplementary Note 1}

A terminal including:

a receiving section that receives at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell; and

a control section that controls transmission of type 1 power headroom (PHR) for uplink shared channel (PUSCH) transmission associated with a certain TCI state, wherein

the control section controls transmission of a first or second type 1 PHR for reference PUSCH transmission by using a specific parameter associated with a first or second TCI state.

{Supplementary Note 2}

The terminal according to supplementary note 1, wherein when actual PUSCH transmission applies only one of the first and second TCI states, the control section controls transmission of the type 1 PHR associated with another one of the first and second TCI states for the reference PUSCH transmission.

{Supplementary Note 3}

The terminal according to supplementary note 1 or 2, wherein the control section controls transmission of the type 1 PHR associated with the TCI state for actual PUSCH transmission using a spatial domain filter corresponding to the certain TCI state.

{Supplementary Note 4}

The terminal according to any one of supplementary notes 1 to 3, wherein when the control section determines that both the first and second type 1 PHRs are based on the reference PUSCH transmission, the control section controls transmission of the first type 1 PHR associated with a first indicated TCI state for the reference PUSCH transmission and transmission of the second type 1 PHR associated with a second indicated TCI state for another reference PUSCH transmission.

(Supplementary Notes)

Regarding one embodiment (third embodiment) of the present disclosure, the following supplementary notes of the invention will be given.

{Supplementary Note 1}

A terminal including:

a receiving section that receives at least one of pieces of information related to an indication of a plurality of transmission configuration indication (TCI) states and multi-panel transmission for a certain serving cell; and
a control section that controls transmission of type 1 power headroom (PHR) for uplink shared channel (PUSCH) transmission associated with a certain TCI state, wherein
when a parameter related to uplink power control is provided, the control section calculates a first or second type 1 PHR for reference PUSCH transmission, based on a specific parameter associated with a first indicated TCI state.

{Supplementary Note 2}

The terminal according to supplementary note 1, wherein a PHR for the reference PUSCH transmission is a virtual PHR independent of actual PUSCH transmission.

{Supplementary Note 3}

The terminal according to supplementary note 1 or 2, wherein when at least one of pieces of information related to a plurality of sounding reference signal (SRS) resource sets, multi-panel transmission, and a plurality of PHR modes is not provided, the control section calculates the PHR, based on the specific parameter.

{Supplementary Note 4}

The terminal according to any one of supplementary notes 1 to 3, wherein the control section determines the specific parameter to be applied, based on a specific higher layer parameter.

(Supplementary Notes)

Regarding one embodiment (fourth/fifth embodiment) of the present disclosure, the following supplementary notes of the invention will be given.

{Supplementary Note 1}

A terminal including:

a receiving section that receives at least one of pieces of information related to a plurality of sounding reference signal (SRS) resource sets, an indication of a plurality of transmission configuration indication (TCI) states, and multi-panel transmission for a certain serving cell; and

a control section that controls transmission of type 1 power headroom (PHR) for uplink shared channel (PUSCH) transmission associated with a certain TCI state, wherein
when information related to a plurality of PHR modes is not provided, the control section controls transmission of the type 1 PHR in a specific slot.

{Supplementary Note 2}

The terminal according to supplementary note 1, wherein when the type 1 PHR is a PHR for actual PUSCH transmission, and the PUSCH transmission applies both first and second TCI states, the type 1 PHR is the PHR for PUSCH transmission associated with the first TCI state.

{Supplementary Note 3}

The terminal according to supplementary note 1 or 2, wherein when the type 1 PHR is a PHR for actual PUSCH transmission, and a plurality of PUSCH transmissions overlap in the specific slot, the type 1 PHR is the PHR for PUSCH transmission associated with a first TCI state.

{Supplementary Note 4}

The terminal according to any one of supplementary notes 1 to 3, wherein when the type 1 PHR is a PHR for actual PUSCH transmission, the control section determines which PHR for PUSCH transmission associated with a TCI state is used, based on a specific higher layer parameter.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

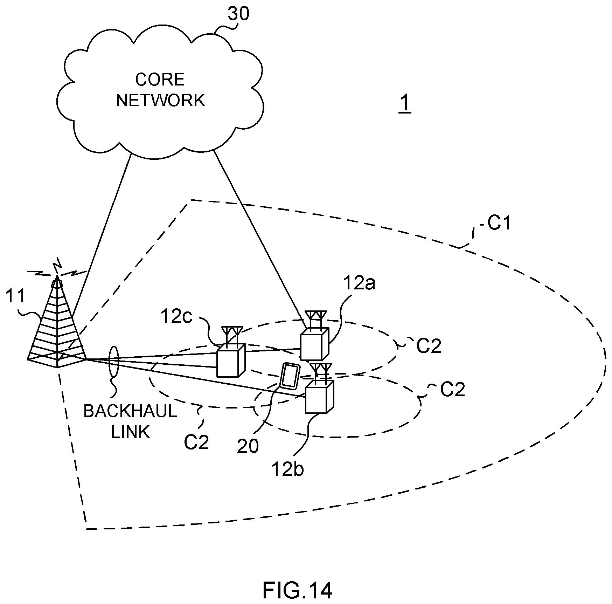

FIG. 14 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the

base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

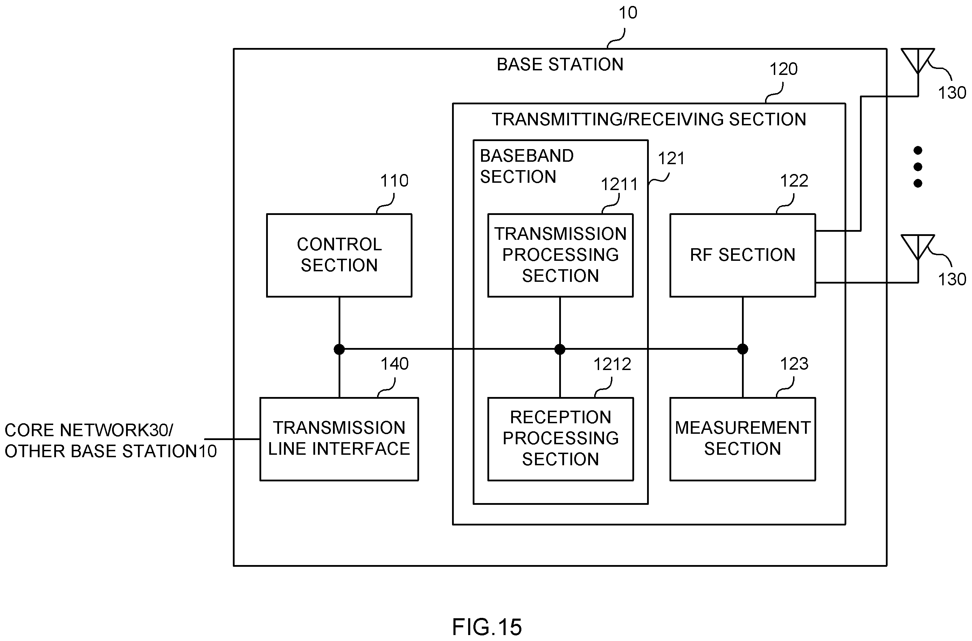

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding),

MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell. The control section 110 may control reception of type 1 power headroom (PHR) for uplink shared channel (PUSCH) transmission associated with a certain TCI state. The control section 110 may control reception of a first or second type 1 PHR for reference PUSCH transmission by using a specific parameter associated with a first or second TCI state.

The transmitting/receiving section 120 may transmit at least one of pieces of information related to an indication of a plurality of transmission configuration indication (TCI) states and multi-panel transmission for a certain serving cell. The control section 110 may control reception of type 1 power headroom (PHR) for uplink shared channel (PUSCH) transmission associated with a certain TCI state. The transmitting/receiving section 120 may receive, when a parameter related to uplink power control is provided to a terminal, a first or second type 1 PHR for reference PUSCH transmission calculated by the terminal based on a specific parameter associated with a first indicated TCI state.

The transmitting/receiving section 120 may transmit at least one of pieces of information related to a plurality of sounding reference signal (SRS) resource sets, an indication of a plurality of transmission configuration indication (TCI) states, and multi-panel transmission for a certain serving cell. The control section 110 may control reception of type 1 power headroom (PHR) for uplink shared channel (PUSCH) transmission associated with a certain TCI state. When information related to a plurality of PHR modes is not provided to a terminal, the control section 110 may control reception of the type 1 PHR in a specific slot.

(User Terminal)

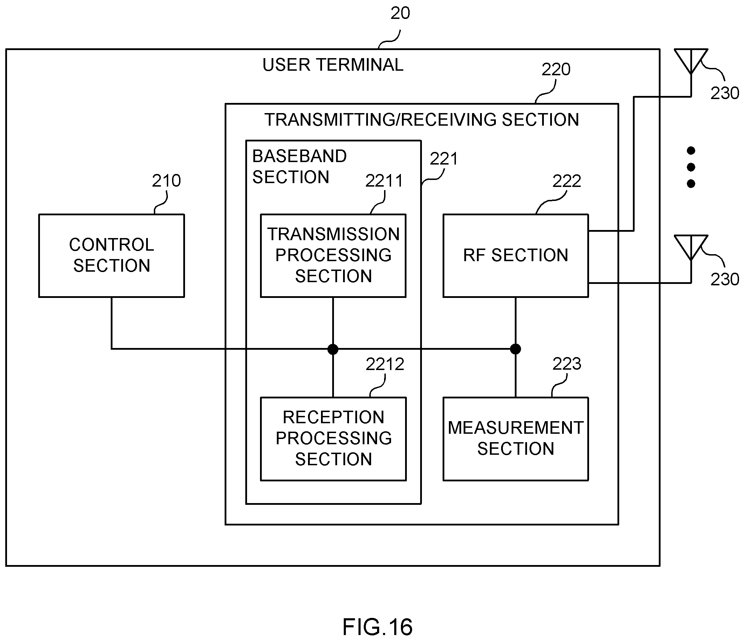

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception

processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell. The control section 210 may control transmission of type 1 power headroom (PHR) for uplink shared channel (PUSCH) transmission associated with a certain TCI state. The control section 210 may control transmission of a first or second type 1 PHR for reference PUSCH transmission by using a specific parameter associated with a first or second TCI state. When actual PUSCH transmission applies only one of the first and second TCI states, the control section 210 may control transmission of the type 1 PHR associated with another one of the first and second TCI states for the reference PUSCH transmission. The control section 210 may control transmission of the type 1 PHR associated with the TCI state for actual PUSCH transmission using a spatial domain filter corresponding to the certain TCI state. When the control section 210 determines that both the first and second type 1 PHRs are based on the reference PUSCH transmission, the control section 210 may control transmission of the first type 1 PHR associated with a first indicated TCI state for the reference PUSCH

transmission and transmission of the second type 1 PHR associated with a second indicated TCI state for another reference PUSCH transmission.

The transmitting/receiving section 220 may receive at least one of pieces of information related to an indication of a plurality of transmission configuration indication (TCI) states and multi-panel transmission for a certain serving cell. The control section 210 may control transmission of type 1 power headroom (PHR) for uplink shared channel (PUSCH) transmission associated with a certain TCI state. When a parameter related to uplink power control is provided, the control section 210 may calculate a first or second type 1 PHR for reference PUSCH transmission, based on a specific parameter associated with a first indicated TCI state. A PHR for the reference PUSCH transmission may be a virtual PHR independent of actual PUSCH transmission. When at least one of pieces of information related to a plurality of sounding reference signal (SRS) resource sets, multi-panel transmission, and a plurality of PHR modes is not provided, the control section 210 may calculate the PHR, based on the specific parameter. The control section 210 may determine the specific parameter to be applied, based on a specific higher layer parameter.

The transmitting/receiving section 220 may receive at least one of pieces of information related to a plurality of sounding reference signal (SRS) resource sets, an indication of a plurality of transmission configuration indication (TCI) states, and multi-panel transmission for a certain serving cell. The control section 210 may control transmission of type 1 power headroom (PHR) for uplink shared channel (PUSCH) transmission associated with a certain TCI state. When information related to a plurality of PHR modes is not provided, the control section 210 may control transmission of the type 1 PHR in a specific slot. When the type 1 PHR is a PHR for actual PUSCH transmission, and the PUSCH transmission applies both first and second TCI states, the type 1 PHR may be the PHR for PUSCH transmission associated with the first TCI state. When the type 1 PHR is a PHR for actual PUSCH transmission, and a plurality of PUSCH transmissions overlap in the specific slot, the type 1 PHR may be the PHR for PUSCH transmission associated with a first TCI state. When the type 1 PHR is a PHR for actual PUSCH transmission, the control section 210 may determine which PHR for PUSCH transmission associated with a TCI state is used, based on a specific higher layer parameter.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

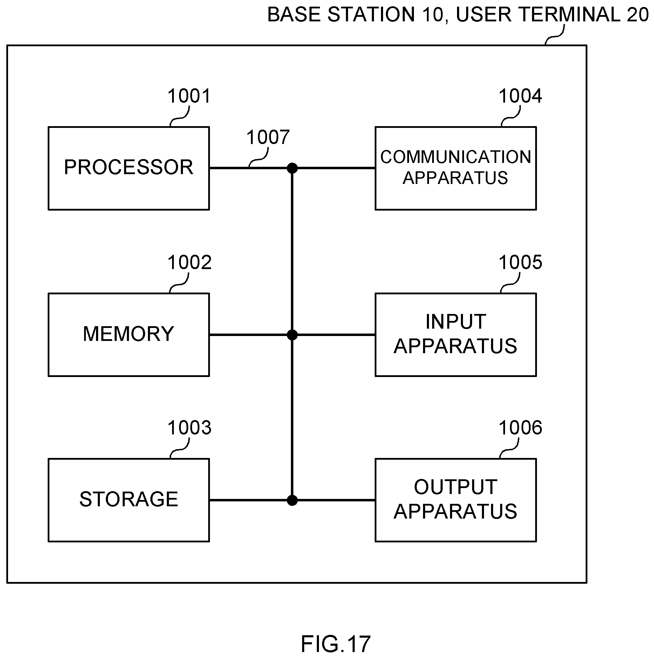

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor

1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic

prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing

(CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

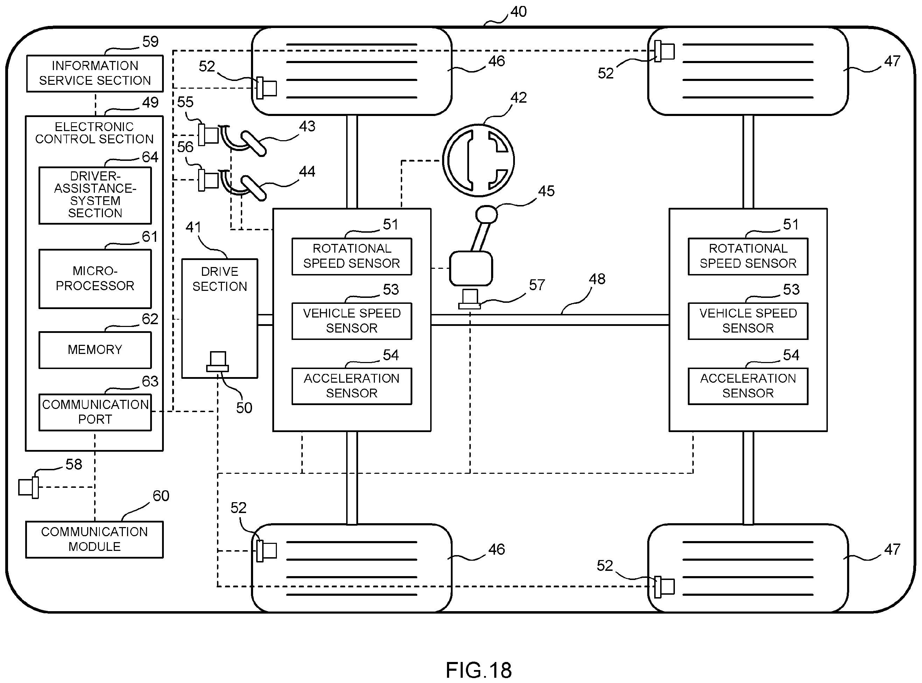

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44,

the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the

apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

**1.** A terminal comprising:

a receiving section that receives at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell; and
a control section that controls transmission of type 1 power headroom (PHR) for uplink shared channel (PUSCH) transmission associated with a certain TCI state, wherein
the control section controls transmission of a first or second type 1 PHR for reference PUSCH transmission by using a specific parameter associated with a first or second TCI state.

2. The terminal according to claim 1, wherein when actual PUSCH transmission applies only one of the first and second TCI states, the control section controls transmission of the type 1 PHR associated with another one of the first and second TCI states for the reference PUSCH transmission.

3. The terminal according to claim 1, wherein the control section controls transmission of the type 1 PHR associated with the TCI state for actual PUSCH transmission using a spatial domain filter corresponding to the certain TCI state.

4. The terminal according to claim 1, wherein when the control section determines that both the first and second type 1 PHRs are based on the reference PUSCH transmission, the control section controls transmission of the first type 1 PHR associated with a first indicated TCI state for the reference PUSCH transmission and transmission of the second type 1 PHR associated with a second indicated TCI state for another reference PUSCH transmission.

5. A radio communication method for a terminal, the radio communication method comprising:

receiving at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell; and
controlling transmission of type 1 power headroom (PHR) for uplink shared channel (PUSCH) transmission associated with a certain TCI state, wherein
the terminal controls transmission of a first or second type 1 PHR for reference PUSCH transmission by using a specific parameter associated with a first or second TCI state.

6. A base station comprising:

a transmitting section that transmits at least one of pieces of information related to a plurality of power headroom (PHR) modes, a plurality of sounding reference signal (SRS) resource sets, an indication of a plurality of transmission configuration indication (TCI) states, and multi-panel transmission for a certain serving cell; and
a control section that controls reception of type 1 power headroom (PHR) for uplink shared channel (PUSCH) transmission associated with a certain TCI state, wherein
the control section controls reception of a first or second type 1 PHR for reference PUSCH transmission by using a specific parameter associated with a first or second TCI state.

FIG.1A
configuration for DL&UL (RRC)
activation for DL&UL (MAC CE)
SSB/ CSI-RS/ SRS
active TCI pool for DL&UL
joint indication
indication for DL&UL (DCI)
one or subset of all DL&UL
FIG.1B
configuration for DL&UL (RRC)
activation for DL/UL (MAC CE)
SSB/ CSI-RS/ SRS
active TCI pool for DL&UL, or separate active TCI pools for DL&UL
separate indication
indication for DL (DCI)
one or subset of all DL
indication for UL (DCI)
one or subset of all UL

FIG.2A

Joint DL/UL TCI state

| TCI field value | Joint DL/UL TCI state |
|---|---|
| 000 | TCI#0 |
| 001 | TCI#1 |
| 010 | TCI#2 |
| 011 | TCI#3 |
| 100 | TCI#4 |
| 101 | TCI#5 |
| 110 | TCI#6 |
| 111 | TCI#7 |

FIG.2B

Separate DL/UL TCI state

| TCI field value | DL only TCI state | UL only TCI state | |
|---|---|---|---|
| 000 | TCI#0 | - | DL TCI state |
| 001 | TCI#1 | - | |
| 010 | - | TCI#2 | UL TCI state |
| 011 | - | TCI#3 | |
| 100 | TCI#4 | TCI#5 | Both of DL TCI state and UL TCI state |
| 101 | TCI#6 | TCI#7 | |
| 110 | TCI#8 | TCI#9 | |
| 111 | TCI#10 | TCI#11 | |

FIG.3A

| | LEGACY FIELDS | NEW FIELDS |
|---|---|---|
| RRC | CB/ NCB SRS resource set | 2nd CB/ NCB SRS resource set |
| RRC | Sri-PUSCH-MappingToAddModList | Sri-PUSCH-MappingToAddModList2 |
| RRC | P0-PUSCH-SetList | P0-PUSCH-SetList2 |
| DCI | SRS resource indicator | 2nd SRS resource indicator |
| DCI | Precoding information and number of layers | 2nd Precoding information and number of layers |
| DCI | PTRS-DMRS association | 2nd PTRS-DMRS association |
| DCI | TPC command | 2nd TPC command |
| | for TRP1 | for TRP2 |

FIG.3B

NEW DCI FIELD

| SRS resource set indicator field | |
|---|---|
| codepoint | S-TRP/M-TRP scheme |
| 00(0) | S-TRP(TRP1) |
| 01(1) | S-TRP(TRP2) |
| 10(2) | M-TRP (TRP1, TRP2 order) |
| 11(3) | M-TRP (TRP2, TRP1 order) |

FIG.4A

UE
PANEL #1
PUSCH
1 TRP
PANEL #2

FIG.4B

UE
PANEL #1
2 TRP
TRP#1
PUSCH
ideal
backhaul
TRP#2
PANEL #2

FIG.5A

UE
1 CW/TB
PANEL #1
1 TRP
PUSCH(1,2,...,L)
COHERENT
PUSCH(1,2,...,L)
PANEL #2
PUSCH(1,2,...,L)

FIG.5B

UE
1 CW/TB
PANEL #1
2 TRP
PUSCH(1,2,...,L)
NON-COHERENT
PUSCH(1,2,...,k)
PANEL #2
PUSCH(k+1,...,L)
ideal
backhaul

FIG.5C

UE
2 CW/TB
PANEL #1
2 TRP
PUSCH(1,2,...,L)
NON-COHERENT
PUSCH(1,2,...,k)
CW/TB#1
PANEL #2
PUSCH(k+1,...,L)
CW/TB#2
ideal
backhaul

FIG.6A
panel#1
DCI
UE
panel#2
FIG.6B
F
PUSCH
LAYER 2
PUSCH
LAYER 1
T
PUSCH
SDM
FIG.6C
F
PUSCH
LAYER 1-2
PUSCH
LAYER 1-2
T
PUSCH SFN
FIG.6D
F
PUCCH
PUCCH
T
PUCCH SFN

FIG.7A

panel#1
UE
DCI
DCI
panel#2

FIG.7B

F
PUSCH2
PUSCH1
T
PUSCH + PUSCH

UE
PUCCH
PUSCH
Overlappied in time
Panel/beam#1
Panel/beam#2

FIG.8C

UE
PUSCH#1
PUSCH#2
Overlappied in time
Panel/beam#1
Panel/beam#2
UE
PUCCH#1
PUCCH#2
Overlappied in time
Panel/beam#1
Panel/beam#2

FIG.8A

FIG.8B

(TS 38.213) 7.7.1 Type 1 PH report

If a UE is provided, for active UL BWP $b$ of carrier $f$ of serving cell $c$,

- twoPHRMode,
- two SRS resource sets in srs-ResourceSetToAddModList or srs-ResourceSetToAddModListDCI-0-2 with usage set to 'codebook' or 'nonCodebook',
- dl-OrJointTCI-StateList or TCI-UL-State and is indicated a first TCI-State or TCI-UL-State and a second TCI-State or TCI-UL-State, and
- multipanelScheme

the UE provides

- If the actual PUSCH transmission applies only the first indicated TCI-state or TCI-UL-State, a first Type 1 power headroom report and a first configured maximum output power associated with the first *TCI-State* or *TCI-UL-State* for an actual PUSCH transmission using a spatial domain filter corresponding only to the first *TCI-State* or *TCI-UL-State*, and a second Type 1 power headroom report and a second configured maximum output power associated with the second TCI-state or TCI-UL-State for a reference PUSCH transmission. The UE provides the second Type 1 power headroom report for reference PUSCH transmission using the p0AlphaSetforPUSCH and pathlossReferenceRS-Id-r17 values associated with the second TCI-State or TCI-UL-State.
- If the actual PUSCH transmission applies only the second indicated TCI-state or TCI-UL-State, a first Type 1 power headroom report and a first configured maximum output power associated with the first TCI-state or TCI-UL-State for a reference PUSCH transmission, and a second Type 1 power headroom report and a second configured maximum output power associated with the second *TCI-State* or *TCI-UL-State* for an actual PUSCH transmission using a spatial domain filter corresponding only to the second *TCI-State* or *TCI-UL-State*. The UE provides the first Type 1 power headroom report for reference PUSCH transmission using the p0AlphaSetforPUSCH and pathlossReferenceRS-Id-r17 values associated with the first TCI-State or TCI-UL-State.
- a first Type 1 power headroom report and a first configured maximum output power associated with the first *TCI-State* or *TCI-UL-State*, and a second Type 1 power headroom report and a second configured maximum output power associated with the second *TCI-State* or *TCI-UL-State*, for an actual PUSCH transmission using a spatial domain filter corresponding to the first *TCI-State* or *TCI-UL-State* and using a spatial domain filter corresponding to the second *TCI-State* or *TCI-UL-State*.
- If the UE determines that both Type 1 PHRs are based on reference PUSCH transmissions a first Type 1 power headroom and a first configured max output power associated with the first indicated joint/UL TCI state for a reference PUSCH transmission, and the second Type 1 power headroom and a second configured max output power associated with the second indicated joint/UL TCI state for another reference PUSCH transmission. The UE provides the first Type 1 power headroom report for reference PUSCH transmission using the p0AlphaSetforPUSCH and pathlossReferenceRS-Id-r17 values associated with the first TCI-State or TCI-UL-State. The UE provides the second Type 1 power headroom report for reference PUSCH transmission using the p0AlphaSetforPUSCH and pathlossReferenceRS-Id-r17 values associated with the second TCI-State or TCI-UL-State.

FIG.9

(TS 38.213) 7.7.1 Type 1 PH report

If a UE is provided, for active UL BWP $b$ of carrier $f$ of serving cell $c$,

- twoPHRMode,
- two SRS resource sets in srs-ResourceSetToAddModList or srs-ResourceSetToAddModListDCI-0-2 with usage set to 'codebook' or 'nonCodebook',
- dl-OrJointTCI-StateList or TCI-UL-State and is indicated a first TCI-State or TCI-UL-State and a second TCI-State or TCI-UL-State, and
- enableSTx2PofmDCI

the UE provides

- If an actual PUSCH transmission applies the first indicated TCI state or TCI-UL-State and another actual PUSCH transmission applies the second indicated TCI state or TCI-UL-State overlap in time, a first Type 1 power headroom report and a first configured maximum output power associated with the first *TCI-State* or *TCI-UL-State* for the actual PUSCH transmission using first *TCI-State* or *TCI-UL-State*, and a second Type 1 power headroom report and a second configured maximum output power associated with the second TCI-state or TCI-UL-State for the actual PUSCH transmission using second TCI-State or TCI-UL-State.
- If an actual PUSCH transmission applies the first indicated TCI state and there is no other PUSCH transmission overlap with the PUSCH, a first Type 1 power headroom report and a first configured maximum output power associated with the first *TCI-State* or *TCI-UL-State* for the actual PUSCH transmission using first *TCI-State* or *TCI-UL-State*, and a second Type 1 power headroom report and a second configured maximum output power associated with the second TCI-state or TCI-UL-State for a reference PUSCH transmission. The UE provides the second Type 1 power headroom report for reference PUSCH transmission using the p0AlphaSetforPUSCH and pathlossReferenceRS-Id-r17 values associated with the second TCI-State or TCI-UL-State.
- If an actual PUSCH transmission applies the second indicated TCI state and there is no other PUSCH transmission overlap with the PUSCH, a first Type 1 power headroom report and a first configured maximum output power associated with the first *TCI-State* or *TCI-UL-State* for a reference PUSCH transmission, and a second Type 1 power headroom report and a second configured maximum output power associated with the second TCI-state or TCI-UL-State for the actual PUSCH transmission using second TCI state or TCI-UL-State. The UE provides the first Type 1 power headroom report for reference PUSCH transmission using the p0AlphaSetforPUSCH and pathlossReferenceRS-Id-r17 values associated with the first TCI-State or TCI-UL-State.
- If the UE determines that both Type 1 PHRs are based on reference PUSCH transmissions  a first Type 1 power headroom and a first configured max output power associated with the first indicated joint/UL TCI state for a reference PUSCH transmission, and the second Type 1 power headroom and a second configured max output power associated with the second indicated joint/UL TCI state for another reference PUSCH transmission. The UE provides the first Type 1 power headroom report for reference PUSCH transmission using the p0AlphaSetforPUSCH and pathlossReferenceRS-Id-r17 values associated with the first TCI-State or TCI-UL-State. The UE provides the second Type 1 power headroom report for reference PUSCH transmission using the p0AlphaSetforPUSCH and pathlossReferenceRS-Id-r17 values associated with the second TCI-State or TCI-UL-State.

FIG.10

FIG.11A

If *ul-powerControl* is provided (If a UE is provided dl-OrJointTCI-StateList or TCI-UL-State), and if UE is indicated a first TCI-State or TCI-UL-State and a second TCI-State or TCI-UL-State, $P_{\mathrm{O_PUSCH},b,f,c}(j)$, $\alpha_{b,f,c}(j)$ and $l$ are obtained by *p0AlphaSetforPUSCH* associated with the first indicated *TCI-State* or *TCI-UL-State*, $PL_{b,f,c}(q_d)$ is obtained by PL-RS associated with the first indicated *TCI-State* or *TCI-UL-State*.

FIG.11B

If *ul-powerControl* is provided (If a UE is provided dl-OrJointTCI-StateList or TCI-UL-State), and if UE is indicated a first TCI-State or TCI-UL-State and a second TCI-State or TCI-UL-State, higher layer parameter xxx indicates $P_{\mathrm{O_PUSCH},b,f,c}(j)$, $\alpha_{b,f,c}(j)$ and $l$ are obtained by *p0AlphaSetforPUSCH* associated with the first or the second indicated *TCI-State* or *TCI-UL-State*, higher layer parameter xxx indicates $PL_{b,f,c}(q_d)$ is obtained by PL-RS associated with the first or the second indicated *TCI-State* or *TCI-UL-State*.

FIG.12A

(TS 38.213) 7.7.1 Type 1 PH report

If a UE is not provided *twoPHRMode*, and is provided two SRS resource sets in *srs-ResourceSetToAddModList* or *srs-ResourceSetToAddModListDCI-0-2* with *usage* set to 'codebook' or 'nonCodebook', and is provided multipanelScheme, and is provided dl-OrJointTCI-StateList or TCI-UL-State and is indicated a first TCI-State or TCI-UL-State and a second TCI-State or TCI-UL-State on active UL BWP $b$ of carrier $f$ of serving cell $c$, the UE provides one Type 1 power headroom report in a slot $n$. If the Type 1 power headroom report is for an actual PUSCH transmission and if the PUSCH transmission applies both first TCI-state or first TCI-UL-State and second TCI-state or second TCI-UL-State (the PUSCH transmission is associated with both first and second SRS resource set), the Type 1 power headroom report is for the PUSCH transmission associated with the first TCI-state or TCI-UL-State (the first SRS resource set).

FIG.12B

(TS 38.213) 7.7.1 Type 1 PH report

If a UE is not provided *twoPHRMode*, and is provided two SRS resource sets in *srs-ResourceSetToAddModList* or *srs-ResourceSetToAddModListDCI-0-2* with *usage* set to 'codebook' or 'nonCodebook', and is provided multipanelScheme, and is provided dl-OrJointTCI-StateList or TCI-UL-State and is indicated a first TCI-State or TCI-UL-State and a second TCI-State or TCI-UL-State on active UL BWP $b$ of carrier $f$ of serving cell $c$, the UE provides one Type 1 power headroom report in a slot $n$. If the Type 1 power headroom report is for an actual PUSCH transmission and if the PUSCH transmission applies both first TCI-state or first TCI-UL-State and second TCI-state or second TCI-UL-State (the PUSCH transmission is associated with both first and second SRS resource set), higher layer parameter xxx indicates the Type 1 power headroom report is for the PUSCH transmission associated with the first or the second TCI-state or TCI-UL-State (the first or the second SRS resource set).

# FIG.13A

(TS 38.213) 7.7.1 Type 1 PH report

If a UE is not provided *twoPHRMode*, and is provided two SRS resource sets in *srs-ResourceSetToAddModList* or *srs-ResourceSetToAddModListDCI-0-2* with *usage* set to 'codebook' or 'nonCodebook', and is provided enableSTx2PofmDCI, and is provided dl-OrJointTCI-StateList or TCI-UL-State and is indicated a first TCI-State or TCI-UL-State and a second TCI-State or TCI-UL-State on active UL BWP $b$ of carrier $f$ of serving cell $c$, the UE provides one Type 1 power headroom report in a slot $n$. If the Type 1 power headroom report is for an actual PUSCH transmission and there are two PUSCH transmissions overlap in time in slot n, where the two PUSCH transmissions apply first and second TCI state (first and second SRS resource set, or first and second CORESETPoolIndex) respectively, the Type 1 power headroom report is for the PUSCH transmission associated with the first TCI-state or TCI-UL-State (the first SRS resource set or CORESETPoolIndex).

# FIG.13B

If the Type 1 power headroom report is for an actual PUSCH transmission and there are two PUSCH transmissions overlap in time in slot n, where the two PUSCH transmissions apply first and second TCI state (first and second SRS resource set, or first and second CORESETPoolIndex) respectively, the Type 1 power headroom report is for the PUSCH transmission starts earlier in time, if the PUSCH transmission starts at the same time, the Type 1 power head room report is for the PUSCH transmission associated with the first TCI-state or TCI-UL-State (the first SRS resource set or CORESETPoolIndex).

# FIG.13C

If the Type 1 power headroom report is for an actual PUSCH transmission and there are two PUSCH transmissions overlap in time in slot n, where the two PUSCH transmissions apply first and second TCI state (first and second SRS resource set, or first and second CORESETPoolIndex) respectively, higher layer parameter xxx indicates the Type 1 power headroom report is for the PUSCH transmission associated with the first or the second TCI-state or TCI-UL-State (the first or the second SRS resource set or CORESETPoolIndex).

# FIG.13D

If the Type 1 power headroom report is for an actual PUSCH transmission and there are two PUSCH transmissions overlap in time in slot n, where the two PUSCH transmissions apply first and second TCI state (first and second SRS resource set, or first and second CORESETPoolIndex) respectively, the Type 1 power headroom report is for the PUSCH transmission starts earlier in time, if the PUSCH transmission starts at the same time, higher layer parameter xxx indicates the Type 1 power head room report is for the PUSCH transmission associated with the first or the second TCI-state or TCI-UL-State (the first or the second SRS resource set or CORESETPoolIndex).

30
CORE
NETWORK
1
C1
11
12a
12c
C2
C2
BACKHAUL
LINK
C2
20
12b

FIG.14

10
BASE STATION
120
TRANSMITTING/RECEIVING SECTION
BASEBAND SECTION
121
110
1211
122
CONTROL SECTION
TRANSMISSION PROCESSING SECTION
RF SECTION
130
130
140
1212
123
CORE NETWORK30/
OTHER BASE STATION10
TRANSMISSION LINE INTERFACE
RECEPTION PROCESSING SECTION
MEASUREMENT SECTION

FIG.15

230
230
20
USER TERMINAL
220
TRANSMITTING/RECEIVING SECTION
222
RF SECTION
223
MEASUREMENT SECTION
221
BASEBAND SECTION
2211
TRANSMISSION PROCESSING SECTION
2212
RECEPTION PROCESSING SECTION
210
CONTROL SECTION

FIG.16

BASE STATION 10, USER TERMINAL 20
1001
PROCESSOR
1007
1004
COMMUNICATION APPARATUS
1002
MEMORY
1005
INPUT APPARATUS
1003
STORAGE
1006
OUTPUT APPARATUS

FIG.17

40
59
INFORMATION SERVICE SECTION
49
ELECTRONIC CONTROL SECTION
64
DRIVER-ASSISTANCE-SYSTEM SECTION
61
MICRO-PROCESSOR
62
MEMORY
63
COMMUNICATION PORT
58
60
COMMUNICATION MODULE
52
55
43
56
44
46
42
45
41
DRIVE SECTION
50
51
ROTATIONAL SPEED SENSOR
53
VEHICLE SPEED SENSOR
54
ACCELERATION SENSOR
57
48
52
47
51
ROTATIONAL SPEED SENSOR
53
VEHICLE SPEED SENSOR
54
ACCELERATION SENSOR
52
46
52
47

FIG.18

## INTERNATIONAL SEARCH REPORT

International application No.
**PCT/JP2023/038054**

**A. CLASSIFICATION OF SUBJECT MATTER**

***H04W 52/34***(2009.01)i; ***H04W 16/28***(2009.01)i; ***H04W 72/21***(2023.01)i
FI: H04W52/34; H04W16/28; H04W72/21

According to International Patent Classification (IPC) or to both national classification and IPC

**B. FIELDS SEARCHED**

Minimum documentation searched (classification system followed by classification symbols)

H04W4/00-99/00, H04B7/24-7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Moderator (MEDIATEK INC.). Moderator summary on extension of unified TCI framework (Final). 3GPP TSG RAN WG1 #114b R1- 2310658. Internet<URL: https://www.3gpp.org/ftp/tsg_ran/WG1_RL1/TSGR1_114b/Docs/R1-2310658.zip>. 13 October 2023<br>p. 5 | 1, 2, 4, 5, 6 |
| Y | p. 5 | 3 |
| Y | NTT DOCOMO, INC. Remaining issues on unified TCI framework extension for multi-TRP. 3GPP TSG RAN WG1 #114b R1-2310022. Internet<URL: https://www.3gpp.org/ftp/tsg_ran/WG1_RL1/TSGR1_114b/Docs/R1-2310022.zip>. 29 September 2023<br>p. 9 | 3 |

☐ Further documents are listed in the continuation of Box C. ☐ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010